# FASCICULE DE BREVET EUROPEEN

(11) **EP 3 873 776 B1**
(45) Date de publication et mention de la délivrance du brevet: **05.07.2023**
(21) Numéro de dépôt: 19798569.0
(22) Date de dépôt: 31.10.2019
(51) Int. Cl.: B60N 2/34, B64D 11/06

(54) **UNITE DE SIEGE PASSAGER POUR UNE CABINE D'AERONEF**
PASSAGIERSITZEINHEIT FÜR EINE FLUGZEUGKABINE
PASSENGER SEAT UNIT FOR AN AIRCRAFT CABIN

(30) Priorité: 02.11.2018 US 201862755028 P
(43) Date de publication de la demande: 08.09.2021
(73) Titulaire: Style & Design Group, 78310 Maurepas (FR)
(72) Inventeur: CHAREYRE, Romain, 92140 CLAMART (FR); STRITTER, Laurent, 78990 ELANCOURT (FR); HENRI, Pierrick, 75009 PARIS (FR); EHRMANN, Charles, 78610 LES BREVIAIRES (FR)
(74) Mandataire: Regimbeau
(86) Numéro de dépôt international: PCT/EP2019/079938
(87) Numéro de publication internationale: WO 2020/089442

(56) Documents cités:
- EP-A1- 2 974 961
- EP-A1- 3 369 613
- WO-A1-01/40013
- FR-A1- 2 860 194
- FR-A1- 3 059 951
- US-A1- 2002 109 389
- US-B1- 6 250 716

## Description

### DOMAINE DE L'INVENTION

La présente invention concerne le domaine des sièges passager pour les cabines d'aéronefs.

### ETAT DE LA TECHNIQUE

Les vols des avions de ligne commerciaux sont de plus en plus longs. En effet, le rayon d'action des avions de type long courrier a tendance à augmenter avec les nouvelles générations d'avions, et la vitesse de vol a tendance à se réduire afin d'optimiser la consommation de carburant. Ainsi, les vols peuvent actuellement durer jusqu'à 19h. Offrir aux passagers un confort satisfaisant est d'autant plus nécessaire que le vol est long.

Par ailleurs, les passagers exigent de plus en plus confort lors des vols, en particulier les passagers premium en classe business ou en première classe. Les critères de confort sont susceptibles de varier d'un passager à l'autre en fonction de l'âge, du genre, de la taille, d'éventuelles maladies, etc.

Un critère de confort communément reconnu par les passagers est la possibilité de bénéficier lors du vol d'une assise active et non passive, c'est-à-dire de pouvoir passer d'une position à une autre sur leur siège. Une assise active promeut le mouvement, améliore les postures, active les muscles du corps, et permet de varier les zones du corps qui sont en contact avec le siège.

Certains avions actuels sont équipés de sièges passagers mobiles entre une position assise et une position allongée du passager, afin de s'adapter aux besoins du passager au cours du vol. Le siège est par exemple en position assise lors du décollage et de l'atterrissage, ou encore lorsque le passager prend ses repas, et peut être actionné vers la position allongée lors de la croisière, par exemple lorsque le passager souhaite se reposer ou dormir.

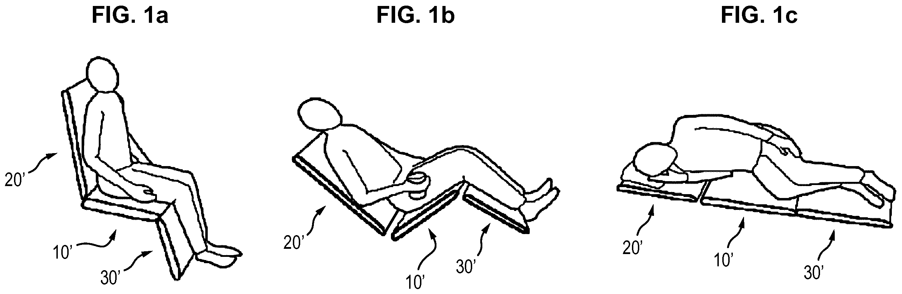

Un siège passager tel que ceux équipant actuellement certains avions de ligne est illustré à titre d'exemple en figures 1a, 1b et 1c. Le siège comprend un cale-rein 20', une assise 10' et un repose-jambe 30'. Le siège est inclinable entre une position assise, représentée en figure 1a, une ou plusieurs positions intermédiaires, telle que la position représentée en figure 1b, et une position allongée, représentée en figure 1c.

Le siège est inclinable entre les différentes positions au moyen d'une cinématique de déploiement faisant appel à des actionneurs électriques. En général, le siège comprend deux à quatre actionneurs et une cinématique glissante d'environ 500 mm vers l'avant pour passer le siège en position allongée. La cinématique d'actionnement du siège suppose également d'installer sous le siège des rails longitudinaux et des boîtes électroniques. Compte-tenu des contraintes de dimension d'un siège d'avion, l'assise 10' du siège pivote et/ou coulisse sur un support d'assise pour entraîner un mouvement de l'ensemble du siège. Le passager commande le mouvement du siège entre les positions assise et allongée par le biais de boutons d'actionnement de la mécanique du siège, qui sont par exemple intégrés à un accoudoir du siège. La cinématique d'actionnement du siège doit en outre être dimensionnée pour accompagner un passager de 120 kg dans tous les mouvements qui lui sont accessibles, avec un gros porte-à-faux en lit.

La cinématique d'actionnement du siège décrite ci-dessus augmente donc fortement la complexité du siège, sa masse, et son coût de fabrication, et présente par ailleurs un coût de maintenance élevé.

Par ailleurs, cette cinématique limite la surface d'assise disponible pour le passager, puisque la largeur du siège est délimitée par les accoudoirs, qui bordent latéralement le siège. De plus, du fait du coulissement vers l'avant de l'assise lors du passage du siège de la position assise à la position lit, les côtés de l'assise sont susceptibles de venir buter contre la coque délimitant le siège à l'avant. Cela limite encore davantage la largeur d'assise, donc la capacité du passager à bouger dans le siège.

Un passager effectuant un vol dans un tel siège garde sensiblement les mêmes parties du corps (tête, dos, et arrière des jambes) en contact avec la même surface, qu'il soit en position assise ou en position allongée. Cela est susceptible de créer des points de forte pression, d'empêcher l'activation des muscles et la circulation sanguine, et ainsi d'occasionner un inconfort pour le passager lors d'un vol de plusieurs heures, ainsi que des risques pour la santé du passager.

Par ailleurs, lorsque le siège est en position allongée, les coussins formant le cale-rein, l'assise et le repose-jambes, peuvent être sensiblement éloignés les uns des autres au niveau de leurs lignes de démarcations. La position allongée présente alors un certain inconfort pour le passager, qui sent sous lui les démarcations entre les différents coussins du siège, avec un risque d'interrompre le passager dans son sommeil lorsqu'il change de posture en dormant.

Par ailleurs, la liberté de mouvement du passager dans un tel siège est réduite et il est difficile pour le passager de changer de position. La durée nécessaire au passager pour passer d'une activité (tel que le fait de manger, travailler, lire, dormir, se reposer, regarder un film, interagir avec d'autres passagers ou des hôtesses, etc.) à une autre est donc augmentée, et les possibilités pour le passager d'effectuer plusieurs activités en même temps (par exemple manger tout en travaillant avec son ordinateur portable sur ses genoux) sont réduites. Le passager est donc limité dans sa capacité à reproduire au cours du vol les mouvements qu'il effectue dans son environnement habituel (tels que s'allonger, se relever, croiser les jambes, s'asseoir en tailleur, etc.).

US 7 315 702 A décrit une unité de siège passager pour une cabine d'aéronef, comprenant une assise, un cale-rein monté mobile entre une première position et une deuxième position, et un repose-jambe monté mobile entre une première position et une deuxième position.

### EXPOSE DE L'INVENTION

Un but de l'invention est de proposer une unité de siège passager pour une cabine d'aéronef offrant un confort amélioré pour le passager.

Un autre but de l'invention est de proposer une unité de siège passager pour une cabine d'aéronef offrant une plus grande liberté de mouvement au passager.

Selon un premier aspect, l'invention concerne une unité de siège passager pour une cabine d'aéronef selon la revendication 1. Certaines caractéristiques préférées mais non limitatives de l'unité de siège passager décrite ci-dessus sont les suivantes, prises individuellement ou en combinaison :
- le cale-rein et le repose-jambe sont montés mobiles en rotation autour de liaisons pivot respectives, et dans laquelle la rotation du cale-rein est indépendante de la rotation du repose-jambe ;
- l'unité de siège passager comprend en outre un appui-tête monté mobile en rotation entre une première position et une deuxième position, l'unité de siège passager étant telle que lorsque l'unité de siège est dans la configuration redressée, le cale-rein et l'appui-tête sont dans la première position et forment une surface sensiblement plane et continue, et la rotation de l'appui-tête étant indépendante de la rotation du cale-rein et de la rotation du repose-jambe ;
- l'unité de siège passager comprend en outre un repose-pied adapté pour être séparé de l'assise d'une distance correspondant sensiblement à une dimension du repose-jambe, de sorte que lorsque l'unité de siège est dans la configuration lit, le cale-rein, l'assise, le repose-jambe et le repose-pied forment une surface sensiblement plane et continue ;
- laquelle l'assise présente une dimension dans la direction de l'axe de jonction entre le cale-rein et l'assise, appelée largeur, qui est supérieure à la largeur du cale-rein ;
- l'unité de siège passager comprend en outre un panneau avant et une tablette adaptée pour être montée sur le panneau avant de sorte à être mobile en rotation autour d'un premier axe de rotation entre une position rabattue dans laquelle la tablette est rabattue contre le panneau avant et une position ouverte dans laquelle la tablette est disposée sensiblement parallèlement à l'assise de sorte à former une surface de travail pour le passager ;
- la tablette comprend un premier plateau, un deuxième plateau et un troisième plateau, les plateaux étant superposés, dans laquelle le premier plateau est adapté pour être monté mobile en rotation autour d'un deuxième axe de rotation perpendiculaire au premier axe de rotation, et le deuxième plateau est adapté pour être monté coulissant selon le premier axe ;
- l'unité de siège passager comprend en outre un panneau avant, le panneau avant présentant un renfoncement adapté pour installer un écran, l'écran étant adapté pour être inclinable par rapport au plan formé par le panneau avant ;
- l'unité de siège passager comprend en outre un panneau latéral adapté pour délimiter latéralement l'unité de siège, et comprend en outre une porte privative adaptée pour être montée sur le panneau latéral coulissante selon un axe longitudinal de l'unité de siège ;
- l'unité de siège passager comprend en outre un module de coque comprenant un support d'assise adapté pour être positionné sous l'assise, et/ou des panneaux latéraux adaptés pour délimiter latéralement l'unité de siège, et/ou un pupitre arrière adapté pour définir un repose-pied d'une unité de siège arrière adjacente, et/ou un module arrière adapté pour définir un panneau avant d'une unité de siège arrière adjacente ;
- le support d'assise et/ou les panneaux latéraux et/ou le pupitre et/ou le module arrière présente(nt) une dimension selon l'axe de jonction entre le cale-rein et l'assise qui est adaptable.

Selon un deuxième aspect, l'invention concerne un agencement d'unités de siège passager pour une cabine d'aéronef, comprenant une pluralité d'unités de siège passager selon le premier aspect, les unités de siège passager étant disposées parallèlement les unes derrière les autres, de sorte que la surface de lit s'étend en diagonale par rapport à un axe longitudinal de l'unité de siège.

Selon un troisième aspect, l'invention concerne un agencement d'unités de siège passager pour une cabine d'aéronef, comprenant une pluralité d'unités de siège passager selon le premier aspect, les unités de siège passager étant disposées en quinconce, de sorte que la surface de lit s'étend parallèlement à un axe longitudinal de l'unité de siège.

Selon un quatrième aspect, l'invention concerne un procédé de fabrication d'un module de coque d'une unité de siège passager pour une cabine d'aéronef selon la revendication 10, le procédé comprenant les étapes suivantes :
- fabrication d'un module de coque présentant une largeur maximale de module de coque,
- détermination d'une largeur de module de coque, la largeur de module de coque déterminée étant adaptée pour être compatible d'une largeur de la cabine d'aéronef dans laquelle le module de coque est destiné à être agencé,
- lorsque la largeur de module de coque déterminée est inférieure à la largeur maximale de module de coque, découpe du module de coque de sorte à obtenir un module de coque présentant une largeur sensiblement égale à la largeur déterminée.

### DESCRIPTION DES FIGURES

D'autres caractéristiques, buts et avantages de la présente invention apparaîtront à la lecture de la description détaillée qui va suivre, donnée à titre d'exemple non limitatif, qui sera illustrée par les figures suivantes :
Les figures 1a, 1b et 1c, déjà commentées, représentent des vues schématiques d'un siège passager dans une position assise, une position intermédiaire et une position allongée.
Les figures 2a et 2c représentent des vues schématiques en perspective d'une unité de siège passager selon un mode de réalisation de l'invention, en position redressée. Les figures 2b et 2d représentent des vues schématiques en perspective d'une unité de siège passager selon un mode de réalisation de l'invention, en position lit.
Les figures 3a, 3b et 3c représentent des vues schématiques en perspective partielles d'une unité de siège passager selon un mode de réalisation de l'invention, pour différentes positions d'une tablette.
Les figures 4a et 4b représentent des vues schématiques en perspective partielles d'une unité de siège passager selon un mode de réalisation de l'invention, pour différentes positions d'un écran et d'un repose-pied.
Les figures 5a et 5b représentent des vues schématiques en perspective partielles d'une unité de siège passager selon un mode de réalisation de l'invention, pour différentes positions d'une porte privative.
La figure 6 représente une vue schématique en perspective d'une unité de siège passager selon un mode de réalisation de l'invention.
Les figures 7a et 7b représentent des vues schématiques d'une unité de siège passager de largeur modulaire selon un mode de réalisation de l'invention.
La figure 8 représente une vue schématique en perspective d'une unité de siège passager selon un mode de réalisation de l'invention.
La figure 9 représente des vues schématiques en perspective d'unités de siège passager selon un mode de réalisation de l'invention, des passagers étant installés sur ces unités de siège.
Les figures 10a, 10b et 10c représentent des vues schématiques en perspective d'un agencement d'unités de siège passager selon un mode de réalisation de l'invention.
Les figures 11a et 11b représentent des vues schématiques de dessus d'unités de siège passager selon un mode de réalisation de l'invention agencées selon deux variantes de réalisation.
La figure 12 représente une vue schématique en perspective d'un agencement d'unités de siège passager selon un mode de réalisation de l'invention.

### DESCRIPTION DETAILLEE DE L'INVENTION

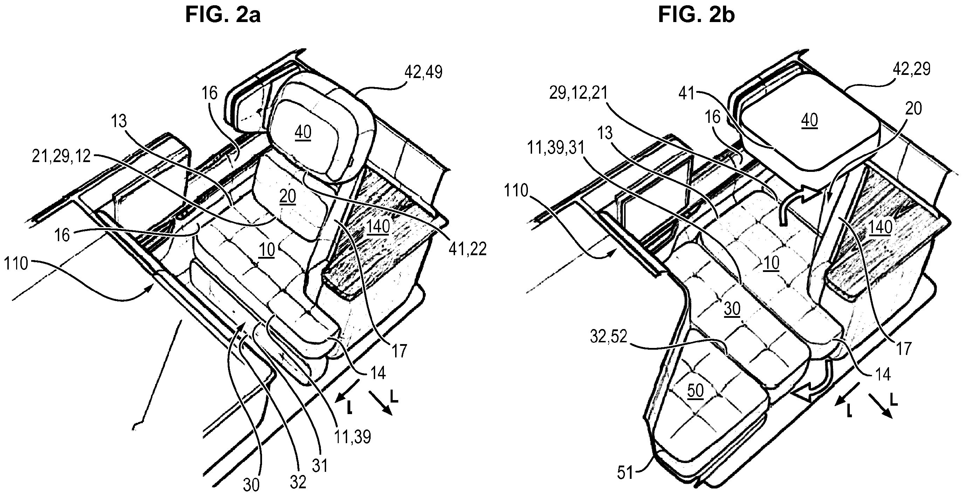

Une unité de siège passager pour une cabine d'aéronef est illustrée à titre d'exemple non limitatif en figures 2a à 2d, 6 et 8.

L'unité de siège comprend une assise 10, un cale-rein 20 monté mobile entre une première position et une deuxième position, et un repose-jambe 30 (leg-rest) monté mobile entre une première position et une deuxième position.

L'unité de siège présente :
- une configuration redressée dans laquelle le cale-rein 20 et le repose-jambe 30 sont dans la première position, et
- une configuration lit dans laquelle le cale-rein 20 et le repose-jambe 30 sont dans la deuxième position, le cale-rein 20, l'assise 10 et le repose-jambe 30 formant une surface sensiblement plane et continue.

L'unité de siège passager présente en outre les caractéristiques suivantes :
- l'assise 10 est fixe,
- le cale-rein 20 est monté mobile en rotation entre la première position et la deuxième position autour d'un axe de jonction entre le cale-rein et l'assise 29, le cale-rein 20 étant adapté pour accueillir un dos d'un passager lorsque le cale-rein 20 est dans la première position, et une tête d'un passager lorsque le cale-rein 20 est dans la deuxième position,
- le repose-jambe 30 est monté mobile en rotation entre la première position et la deuxième position autour d'un axe de jonction entre le repose-jambe et l'assise 39.

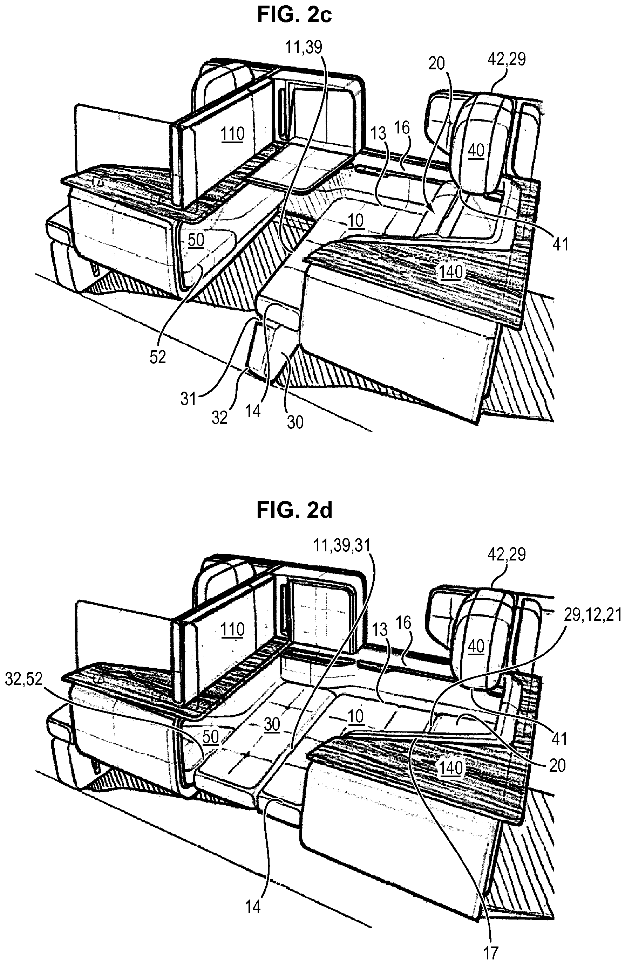

Une unité de siège dans la configuration redressée est représentée à titre d'exemple non limitatif en figures 2a et 2c. Une unité de siège dans la configuration lit est représentée à titre d'exemple non limitatif en figures 2b et 2d.

Le cale-rein 20, l'assise 10 et le repose-jambe 30 forment une surface sensiblement plane et continue lorsque l'unité de siège est dans la configuration lit. Ainsi, le passager dispose d'un grand matelas plat où il peut s'allonger dans différentes positions confortablement. La surface du cale-rein 20 s'ajoute à la surface d'assise 10 et à la surface de repose-jambe 30 de sorte à maximiser la surface de lit totale disponible pour le passager. Le passager peut, dans la configuration lit de l'unité de siège, s'allonger de sorte à ce que sa tête repose sur la surface formée par le cale-rein 20.

Par ailleurs, le confort du passager est amélioré, car l'unité de siège en position lit se présente comme un grand matelas plat et sans séparation marquée entre ses différents éléments.

Le cale-rein 20 et le repose-jambe 30 sont montés mobile en rotation autour d'axes de jonction, c'est-à-dire qu'ils sont pivotants autour des axes jonctions 29, 39. Seuls ces éléments nécessitent d'être actionnés pour passer de la configuration redressée à la configuration lit de l'unité de siège, et vice-versa.

Ainsi, la configuration de l'unité de siège peut être modifiée par une rotation du cale-rein 20 et une rotation du repose-jambe 30 afin de s'adapter aux besoins du passager au cours du vol. En particulier, l'unité de siège peut être en configuration redressée lors du décollage et de l'atterrissage, ou encore lorsque le passager prend ses repas, et être en configuration lit lors de la croisière, par exemple lorsque le passager souhaite se reposer ou dormir.

Par ailleurs, les axes de rotation respectifs du cale-rein 20 et du repose-jambe 30 étant leurs axes de jonction respectifs avec l'assise 29, 39, la surface d'assise 10 n'est pas modifiée par la position du cale-rein 20 ou du repose-jambe 30, et la surface totale de l'ensemble assise 10, cale-rein 20 et repose-jambe 30 est maximisée lorsque le cale-rein 20 et le repose-jambe 30 sont dans la deuxième position.

Par ailleurs, une telle unité de siège présentant une assise 10 fixe, et un cale-rein 20 et un repose-jambe 30 pivotants autour d'axes de rotation respectifs 29, 39, ne nécessite aucune cinématique de déploiement, telle que des actionneurs et des rails mécaniques, pour passer de la configuration redressée à la configuration lit, et vice-versa.

L'absence de cinématique de déploiement permet de réduire sensiblement le coût, la complexité et la masse de l'unité de siège par rapport à une unité de siège intégrant une telle cinématique. Cela entraîne une diminution conséquente de consommation carburant d'un avion équipé de telles unités de sièges. Par ailleurs, l'absence de cinématique de déploiement permet de réduire considérablement les coûts de maintenance du siège, du fait de la simplification de la cinématique.

Par ailleurs, l'absence de cinématique de déploiement libère de l'espace, en particulier de l'espace sous le siège. Cet espace libre peut par exemple être utilisé pour stocker des bagages sous le siège, par exemple une ou deux valises. Ainsi, les racks à bagage classiquement installés dans des espaces ménagés dans la cabine au-dessus des sièges pourraient être supprimés, ce qui apporte un gain de masse et de coût, ainsi qu'une cabine bien plus ouverte et accueillante.

L'absence de cinématique de déploiement permet en outre d'intégrer à l'unité de siège une assise 10 dont la largeur, donc la surface d'assise 10, est sensiblement augmentée. En effet, dans des sièges conventionnels, la largeur d'assise est limitée pour ne pas entrer en collision avec la coque de l'unité de siège avant adjacente du fait du déplacement de l'assise vers l'avant lors du déploiement de l'unité de siège vers la position lit. La largeur augmentée d'assise permet donc au passager de changer plus facilement de position pour une même configuration de l'unité de siège, de disposer d'un plus grand espace et de passer plus facilement d'une activité à une autre, ou d'effectuer plusieurs activités en parallèle au cours du vol.

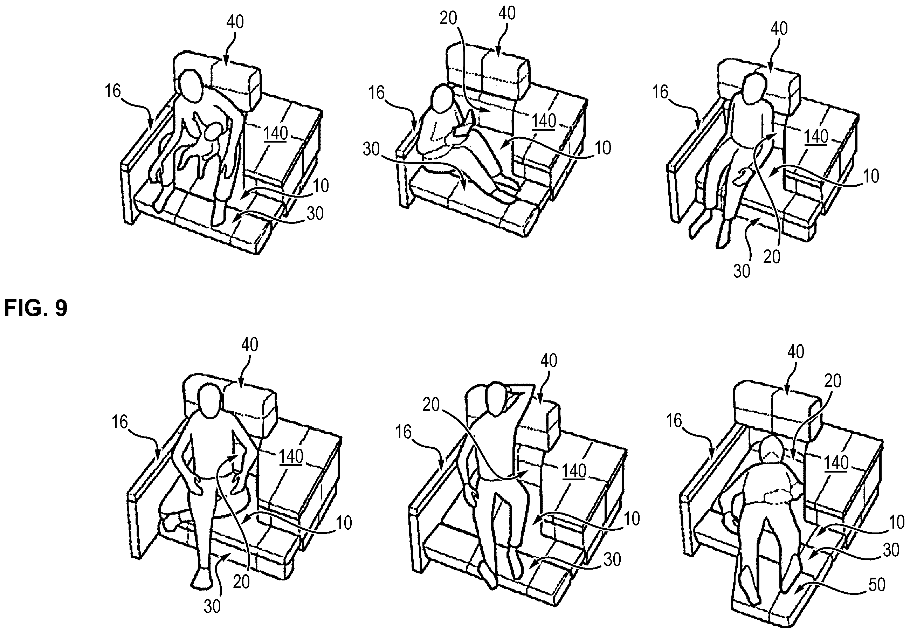

La figure 9 illustre des exemples de différentes positions accessibles pour un passager dans une unité de siège. Dans la configuration redressée de l'unité de siège, le passager peut par exemple être en position assise 10 avec le bas de son dos reposant contre le cale-rein 20, les cuisses reposant sur l'assise 10, et les mollets reposant à proximité ou contre le repose-jambe 30. Dans la configuration lit de l'unité de siège, le passager peut être allongé, la tête reposant sur le cale-rein 20, le tronc reposant sur l'assise 10, les jambes reposant sur le repose-jambe 30.

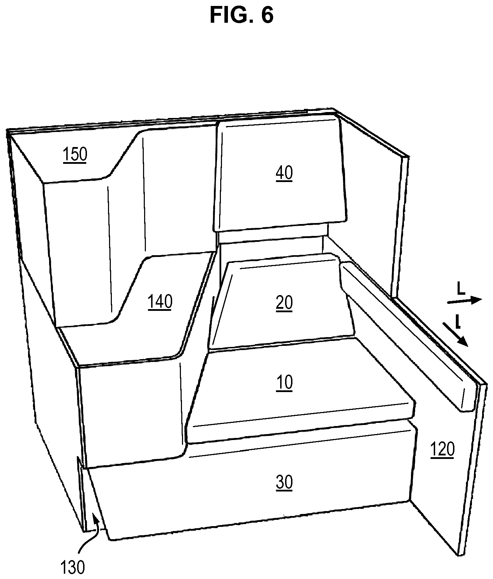

L'unité de siège présente une direction longitudinale l, ainsi qu'illustrée à titre d'exemple en figures 2a, 2b et 6. L'avant et l'arrière sont définis en relation avec cette direction longitudinale l, de sorte que le cale-rein 20 est situé en une position arrière par rapport au repose-jambe 30. Une dimension selon la direction longitudinale l est appelée longueur.

L'unité de siège présente en outre une direction latérale, L, ainsi qu'illustrée à titre d'exemple en figure 2b. La direction latérale L correspond à une direction de l'axe de jonction entre le cale-rein et l'assise 29. Une dimension selon la direction latérale L est appelée largeur.

L'assise 10 est adjacente avec le cale-rein 20 à l'arrière et avec le repose-jambe 30 à l'avant.

L'assise 10 est fixe, c'est-à-dire que la reconfiguration de l'unité de siège par le biais de la rotation du cale-rein 20 et/ou du repose-jambe 30 ne modifie pas une position de l'assise 10.

L'assise 10 peut présenter un bord arrière de l'assise 12 sensiblement droit et un bord avant de l'assise 11 sensiblement droit. Le bord arrière de l'assise 12 coïncide sensiblement avec l'axe de jonction entre le cale-rein et l'assise 29, et le bord avant de l'assise 11 coïncide sensiblement avec l'axe de jonction entre le repose-jambe et l'assise 39.

L'assise 10 peut présenter une dimension dans la direction de l'axe de jonction entre le cale-rein et l'assise 29, appelée largeur, qui est supérieure à la dimension du cale-rein 20 dans cette même direction. La largeur de l'assise 10 est donc supérieure à la largeur du cale-rein 20. Une telle configuration est possible car la dimension de l'assise 10 dans la direction de l'axe de jonction entre le cale-rein et l'assise 29 n'est pas limitée par la présence de rails latéraux, d'actionneurs et d'accoudoirs latéraux longitudinaux, et n'est pas non plus limitée par un déplacement vers l'avant de l'assise lors du passage en configuration lit, l'assise 10 étant fixe et ne venant donc pas buter contre l'unité de siège avant adjacente. Ainsi, la surface d'assise 10 destinée à être en contact avec le passager est augmentée et le confort du passager est amélioré.

L'assise 10 présente une forme évasée vers l'avant, un premier bord latéral de l'assise 13 étant aligné avec l'axe longitudinal de l'unité de siège, et un deuxième bord latéral de l'assise 14 étant disposé en diagonale par rapport à l'axe longitudinal. La largeur du bord avant de l'assise 11 présente ainsi une largeur supérieure à la largeur du bord arrière de l'assise 12. A titre d'exemple, la largeur du bord arrière de l'assise 12 peut correspondre à une largeur d'assise d'une unité de siège comprenant une cinématique de déploiement nécessitant des rails et actionneurs, et la largeur du bord avant de l'assise 11 peut être augmentée d'environ 50% par rapport à la largeur du bord arrière de l'assise 12.

L'unité de siège peut comprendre deux accoudoirs 16, 17 délimitant latéralement l'assise 10. Un accoudoir longitudinal 16 peut être disposé au niveau du premier bord latéral de l'assise 13, et un accoudoir diagonal 17 peut être disposé au niveau d'au moins une partie du deuxième bord latéral de l'assise 14. La surface de lit d'une telle unité de siège est ainsi augmentée par rapport à une surface de lit d'un siège à cinématique de déploiement classique avec deux accoudoirs longitudinaux délimitant latéralement l'assise 10.

Ainsi, l'unité de siège offre des positions supplémentaires par rapport à un siège avec deux accoudoirs longitudinaux. Le passager peut par exemple, lorsque l'unité de siège est dans la position redressée, être assis et orienté suivant l'axe longitudinal, le dos reposant contre le cale-rein 20 et les cuisses contre l'assise 10, puis pivoter dans son siège pour s'asseoir dans la largeur de l'unité de siège, par exemple en s'adossant à l'accoudoir longitudinal 16. Le passager peut également le cas échéant faire pivoter le repose-jambe 30 dans la deuxième position afin de disposer d'une surface supplémentaire pour poser ses pieds ou changer de position. Lorsque l'unité de siège est dans la position lit, le passager peut être allongé en diagonale par rapport à l'axe longitudinal du siège.

L'accoudoir longitudinal 16 peut délimiter latéralement l'ensemble de l'assise 10. L'accoudoir diagonal 17 peut délimiter latéralement une partie arrière de l'assise, une partie avant de l'assise étant dénuée d'accoudoir diagonal. La partie arrière de l'assise peut être sensiblement trapézoïdale évasée vers l'avant, et la partie avant de l'assise peut être en forme de losange.

La largeur de la partie avant de l'assise peut être augmentée par rapport à la largeur de la partie arrière de l'assise, et peut correspondre sensiblement à une largeur du repose-jambe 30. L'assise 10 comprend donc une partie située à l'extérieur de l'accoudoir diagonal 17, ce qui augmente encore sa surface totale.

Le cale-rein 20 peut présenter un premier bord de cale-rein 21 coïncidant sensiblement avec l'axe de jonction entre le cale-rein et l'assise 29, et un deuxième bord de cale-rein 22 opposé au premier bord 21.

Le cale-rein 20 est monté à rotation autour de l'axe de jonction entre le cale-rein et l'assise 29. Le cale-rein 20 peut être monté mobile en rotation autour d'une liaison pivot de cale-rein 20, l'axe de la liaison pivot correspondant à l'axe de jonction entre le cale-rein et l'assise 29. Le cale-rein 20 peut être déplacé depuis la première position vers la deuxième position par une rotation vers l'arrière autour de l'axe de jonction entre le cale-rein et l'assise 29.

Une rotation du cale-rein 20 entre les première et deuxième positions peut correspondre à une rotation d'angle compris entre 70° et 110°, de préférence entre 80° et 100°, de préférence d'environ 90°.

Le cale-rein 20 peut présenter en outre une pluralité, voire un continuum, de positions intermédiaires entre la première position et la deuxième position, c'est-à-dire correspondant à une rotation du cale-rein 20 présentant un angle compris entre 0° et l'angle de rotation entre la première position et la deuxième position. Par exemple, le cale-rein 20 peut être incliné par rapport à la première position d'un angle de 30°, ou encore de 45°, ou de 70°.

Le cale-rein 20 peut également présenter une pluralité, voire un continuum, de positions au-delà des première et deuxième positions, correspondant à une rotation vers l'avant par rapport à la première position, ou à une rotation vers l'arrière par rapport à la deuxième position. Un continuum de positions du cale-rein 20 entre ou au-delà des première et deuxième positions permet au passager de régler l'inclinaison du cale-rein 20 pour trouver un confort optimal adapté à toute sorte d'activité qu'il effectue au cours du vol.

L'axe de jonction entre le cale-rein et l'assise 29 correspond à un axe d'articulation du cale-rein 20 par rapport à l'assise 10, c'est-à-dire à une interface entre le cale-rein 20 et l'assise 10. L'axe de jonction entre le cale-rein et l'assise 29 peut être un axe sensiblement perpendiculaire à l'axe longitudinal, formant avec l'axe longitudinal un plan horizontal.

Dans la première position, le cale-rein 20 peut s'étendre sensiblement dans un plan normal à la direction longitudinale l de l'unité de siège, appelé plan vertical. En variante, lorsque le cale-rein 20 est dans la première position, le cale-rein 20 peut être incliné de quelques degrés, vers l'avant ou vers l'arrière, par rapport au plan vertical.

Dans la deuxième position, le cale-rein 20 s'étend sensiblement dans le plan horizontal de l'unité de siège.

Le repose-jambe 30 peut présenter un premier bord de repose-jambe 31 coïncidant sensiblement avec l'axe de jonction entre le repose-jambe et l'assise 39, et un deuxième bord de repose-jambe 32 opposé au premier bord 31.

Le repose-jambe 30 peut être monté mobile en rotation autour d'une liaison pivot de repose-jambe 30, l'axe de la liaison pivot correspondant à l'axe de jonction entre le repose-jambe et l'assise 39. Le repose-jambe 30 peut être déplacé depuis la première position vers la deuxième position par une rotation vers l'avant autour de l'axe de jonction entre le repose-jambe et l'assise 39.

Une rotation du repose-jambe 30s entre les première et deuxième positions peut correspondre à une rotation d'angle compris entre 70° et 110°, de préférence entre 80° et 100°, de préférence d'environ 90°.

Le repose-jambe 30 peut présenter en outre une pluralité, voire un continuum, de positions intermédiaires entre la première position et la deuxième position, c'est-à-dire correspondant à une rotation du repose-jambe 30 comprise entre 0° et l'angle de rotation entre la première position et la deuxième position. Par exemple, le repose-jambe 30 peut être incliné par rapport à la première position d'un angle de 30°, ou encore de 45°, ou de 70°.

Le repose-jambe 30 peut également présenter une pluralité, voire un continuum, de positions extrêmes correspondant à une rotation vers l'arrière par rapport à la première position, ou à une rotation vers l'avant par rapport à la deuxième position.

L'axe de jonction entre le repose-jambe et l'assise 39 peut être un axe sensiblement perpendiculaire à l'axe longitudinal et parallèle à l'axe de jonction entre le cale-rein et l'assise 29.

Dans la première position, le repose-jambe 30 peut s'étendre sensiblement dans le plan vertical. En variante, lorsque le repose-jambe 30 est dans la première position, le repose-jambe 30 peut être incliné de quelques degrés, vers l'avant ou vers l'arrière, par rapport au plan vertical.

Dans la deuxième position, le repose-jambe 30 s'étend sensiblement dans le plan horizontal de l'unité de siège. Par exemple, l'unité de siège peut être déplacée dans une configuration où le cale-rein 20 est dans la première position et le repose-jambe 30 dans la deuxième position, le passager pouvant par exemple être assis avec les jambes allongées et/ou les pieds reposant sur le repose-jambe 30.

Un espace est en outre ménagé derrière le repose-jambe 30 lorsque celui-ci est dans la première position. Cet espace à l'arrière du repose-jambe 30 sous le siège est disponible car l'unité de siège ne comprend pas d'actionneurs ni de rails d'actionnement. Ainsi, des bagages peuvent être stockés derrière le repose-jambe 30. Cela permet de stocker davantage de bagages, voire de supprimer les espaces de stockage de bagage classiquement ménagés dans la partie supérieure de la cabine d'avion.

Le repose-jambe 30 peut comprendre deux parties adjacentes, chacune étant mobile en rotation autour de l'axe de jonction entre le repose-jambe et l'assise 39. Les deux parties sont disposées côte à côte dans la direction latérale L. La rotation des deux parties autour de l'axe de jonction entre le repose-jambe et l'assise 309 peut être indépendante. Ainsi, le passager peut relever ou rabattre une partie seulement du repose-jambe 30.

La rotation du cale-rein 20 peut être indépendante de la rotation du repose-jambe 30. Ainsi, le cale-rein 20 peut être déplacé en rotation d'une position à une autre, tout en gardant un repose-jambe 30 fixe, et vice versa. De la sorte, le nombre de configurations accessibles à l'unité de siège est encore augmenté, ce qui augmente le confort du passager, qui peut davantage adapter l'unité de siège à ses besoins au cours du vol. En variante, la rotation du cale-rein 20 peut être liée à celle du repose-jambe 30, les deux rotations étant alors synchronisées de sorte à ce que lorsque le cale-rein 20 est déplacé depuis la première position jusqu'à la deuxième position, le repose-jambe 3à est également déplacé depuis la première position jusqu'à la deuxième position, et vice-versa.

Lorsque l'unité de siège est dans la configuration lit, le premier bord de repose-jambe 31 est adjacent avec le bord avant de l'assise 11, et le bord arrière de l'assise 12 est adjacent avec le premier bord de cale-rein 21.

L'assise 10 peut présenter une forme trapézoïdale. Une plus petite base de l'assise 10 délimite une jonction entre l'assise 10 et le cale-rein 20, une plus grande base de l'assise 10 délimite une jonction entre l'assise 10 et le repose-jambe 30, un premier bord latéral de l'assise 13 est longitudinal et un deuxième bord latéral de l'assise 14 est diagonal, les deux bords latéraux de l'assise 13, 14 étant délimités par des accoudoirs 16, 17 respectifs.

L'axe de jonction entre le repose-jambe et l'assise 39 est alors parallèle avec l'axe de jonction entre le cale-rein et l'assise 29. Lorsque l'unité de siège est dans la configuration redressée, le repose-jambe 30 et le cale-rein 20 sont sensiblement parallèles et s'étendent dans le plan vertical. Lorsque l'unité de siège est dans la configuration lit, le repose-jambe 30 et le cale-rein 20 sont sensiblement parallèles et s'étendent dans le plan horizontal, le cale-rein 20, l'assise 10 et le repose-jambe 30 formant une surface sensiblement horizontale et continue.

La figure 9 illustre à titre d'exemple non limitatif différentes positions accessibles pour un passager sur une unité de siège telle que décrite ci-dessus.

L'unité de siège peut comprendre en outre un appui-tête 40. L'appui-tête 40 est monté mobile en rotation entre une première position et une deuxième position autour d'un axe de rotation d'appui-tête 49. La rotation de l'appui-tête 40 est indépendante de la rotation du cale-rein 20 et de la rotation du repose-jambe 30.

Lorsque le cale-rein 20 et l'appui-tête 40 sont dans la première position, le cale-rein 20 et l'appui-tête 40 peuvent être sensiblement parallèles entre eux et situés dans un même plan. En variante, l'appui-tête 40 dans la première position peut être incliné vers l'arrière, par exemple de quelques degrés, par rapport au cale-rein 20 dans la première position. Lorsque le cale-rein 20 et l'appui-tête 40 sont parallèles entre eux, ils peuvent être séparés l'un de l'autre par un espace, ou former une surface sensiblement plane et continue.

L'appui-tête 40 peut présenter un premier bord d'appui-tête 41 et un deuxième bord d'appui-tête 42 opposé au premier bord 41. Le deuxième bord d'appui-tête 42 coïncide sensiblement avec l'axe de rotation d'appui-tête 49. La largeur de l'appui-tête 40 peut être comprise entre une largeur de cale-rein 20, et une largeur de l'unité de siège.

L'appui-tête 40 peut être monté mobile en rotation autour d'une liaison pivot d'appui-tête 40, l'axe de la liaison pivot correspondant à l'axe de rotation d'appui-tête 49. L'appui-tête 40 peut être déplacé depuis la première position vers la deuxième position par une rotation vers l'avant autour de l'axe de rotation d'appui-tête 49. L'axe de rotation d'appui-tête 49 peut être un axe sensiblement perpendiculaire à l'axe longitudinal et parallèle à l'axe de jonction entre le cale-rein et l'assise 29.

Dans la première position, l'appui-tête 40 peut s'étendre dans le plan vertical. En variante, dans la première position, l'appui-tête 40 peut être incliné de quelques degrés, vers l'avant ou vers l'arrière, par rapport au plan vertical.

Lorsque l'unité de siège est dans la position redressée, l'appui-tête 40 et le cale-rein 20 sont tous deux dans la première position. Alors, le premier bord d'appui-tête 41 coïncide sensiblement avec le deuxième bord du cale-rein 22, l'appui-tête 40 et le cale-rein 20 présentant sensiblement la même inclinaison. Ainsi, l'appui-tête 40 prolonge le cale-rein 20 et forme avec lui une surface sensiblement verticale et continue, de sorte à offrir une surface supplémentaire d'appui pour le dos et la tête du passager.

Dans la deuxième position, l'appui-tête 40 s'étend sensiblement dans le plan horizontal de l'unité de siège.

Lorsque l'unité de siège est dans la configuration lit, l'appui-tête 40 peut être déplacé par le passager vers la deuxième position de sorte à être situé au-dessus de la tête du passager lorsque celui-ci est couché sur le lit formé par le repose-jambe 30, l'assise 10 et le cale-rein 20. L'appui-tête 40 crée alors un espace privé pour le passager, diminue la luminosité à l'intérieur de cet espace en empêchant les rayons lumineux d'y pénétrer, et améliore l'isolation sonore au sein de cet espace, ce qui contribue à améliorer le confort pour le passager.

L'unité de siège peut comprendre un repose-pied 50. Le repose-pied 50 est adapté pour être séparé de l'assise 10 d'une distance correspondant sensiblement à une dimension du repose-jambe 30, de sorte que lorsque l'unité de siège est dans la configuration lit, le cale-rein 20, l'assise 10, le repose-jambe 30 et le repose-pied 50 forment une surface sensiblement plane et continue. Ainsi, la surface de lit de l'unité de siège, formée par le cale-rein 20, l'assise 10 et le repose-jambe 30, est prolongée par le repose-pied 50. La présence du repose-pied 50 augmente donc la surface totale disponible pour le passager dans la configuration lit.

Dans un premier mode de réalisation, le repose-pied 50 est fixe, c'est-à-dire que la reconfiguration de l'unité de siège par le biais de la rotation du cale-rein 20 et/ou du repose-jambe 30 ne modifie pas une position du repose-pied 50.

Le repose-pied 505 peut présenter une surface destinée à être au contact du passager qui est sensiblement parallèle avec l'assise 10, présenter un bord avant de repose-pied 51 sensiblement droit, et un bord arrière de repose-pied 52 sensiblement droit.

Le repose-pied 50 peut être séparé de l'assise 10 d'une distance correspondant sensiblement à longueur du repose-jambe 30. Le repose-pied 50 est disposé de sorte que lorsque le repose-jambe 30 est dans la deuxième position, le bord arrière de repose-pied 52 coïncide sensiblement avec le deuxième bord du repose-jambe 30.

L'axe de délimitation entre le repose-jambe 30 et le repose-pied 50 peut être sensiblement parallèle à l'axe de jonction entre le repose-jambe et l'assise 39 et/ou à l'axe de jonction entre le cale-rein et l'assise 29.

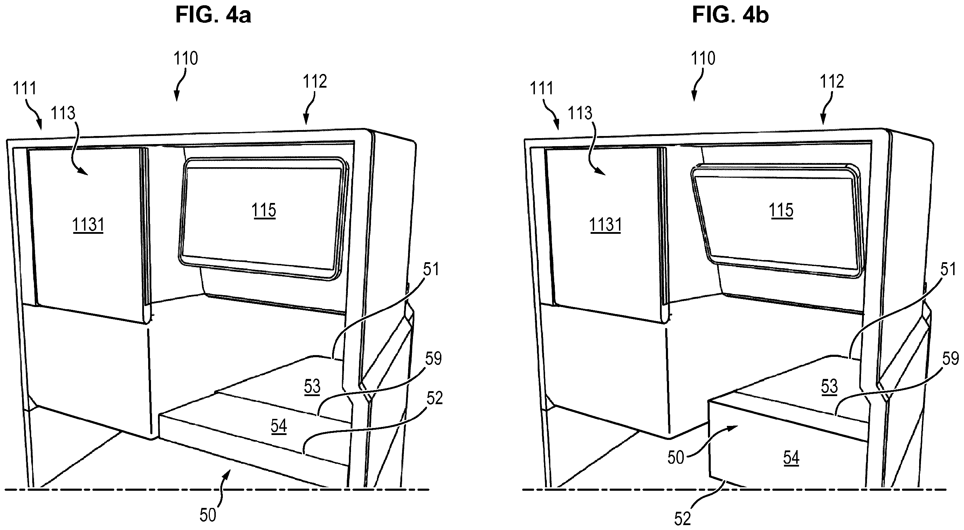

Dans un deuxième mode de réalisation, le repose-pied 50 est mobile, ainsi qu'illustré à titre d'exemple non limitatif en figures 4a et 4b. Le repose-pied 50 comprend une partie avant de repose-pied 53 et une partie arrière de repose-pied 54. La partie avant de repose-pied 53 est séparée de l'assise 10 d'une distance correspondant à une longueur combinée de la partie arrière de repose-pied 54 et du repose-jambe 30.

La partie avant de repose-pied 53 est fixe et sensiblement parallèle avec l'assise 10. La partie arrière de repose-pied 54 est mobile en rotation, par exemple en rotation vers l'avant entre une première position et une deuxième position. L'axe de rotation de la partie arrière de repose-pied 54 correspond à un axe de jonction entre la partie avant de repose-pied 53 et la partie arrière de repose-pied 54.

Dans la première position, la partie arrière de repose-pied 54 s'étend sensiblement dans le plan vertical. Dans la deuxième position, la partie arrière de repose-pied 54 s'étend sensiblement dans le plan horizontal. La partie arrière de repose-pied 54 est alors adjacente à la partie avant de repose-pied 53 et forme avec la partie avant de repose-pied 53 et le repose-jambe 30 dans la deuxième position une surface sensiblement horizontale, plane et continue.

Un tel repose-pied 50 présentant une partie avant de repose-pied 53 fixe et une partie arrière de repose-pied 54 mobile en rotation augmente le nombre de configurations envisageables de l'unité de siège. Par exemple, lorsque le passager souhaite quitter son siège pour se déplacer dans l'avion, ou revenir à son siège après un déplacement, il peut souhaiter positionner l'unité de siège en configuration redressée et la partie arrière de repose-pied 54 dans la deuxième position. Ainsi, de l'espace est libéré entre l'assise 10 et le repose-pied 50, et le passager dispose de plus d'espace pour sortir du siège ou s'y asseoir.

Le cale-rein 20 et/ou le repose-jambe 30 peut être déplacé entre les positions qui lui sont accessibles par une action du passager. Dans un premier exemple de réalisation, le passager déplace le cale-rein 20 et/ou le repose-jambe 30 en appuyant sur un ou plusieurs bouton(s) de contrôle du cale-rein 20 et/ou du repose-jambe 30, le(s) bouton(s) est situé(s) par exemple sur une manette intégrée au siège, ou encore sur une télécommande. Par exemple, un premier bouton peut contrôler la rotation du cale-rein 20, et un deuxième bouton peut contrôler la rotation du repose-jambe 30, les deux rotations étant indépendantes. Un troisième bouton peut contrôler une rotation simultanée synchronisée du cale-rein 20 et du repose-jambe 30. En variante, un seul bouton peut contrôler les rotations, indépendantes ou simultanées, du cale-rein 20 et/ou du repose-jambe 30. Le(s) bouton(s) contrôle(nt) un ou plusieurs actionneur(s) électrique(s) ou un ou plusieurs vérin(s) à gaz ou hydraulique(s), par exemple un actionneur ou vérin pour le cale-rein 20 et un actionneur ou vérin pour le repose-jambe 30. Le(s) actionneur(s) ou vérin(s) contrôle(nt) en retour une rotation du cale-rein 20 et/ou du repose-jambe 30. Dans un deuxième exemple de réalisation, le passager déplace le cale-rein 20 et/ou le repose-jambe 30 en exerçant manuellement une pression mécanique sur le cale-rein 20 et/ou le repose-jambe 30.

Le cale-rein 20, l'assise 10 et le repose-jambe 30, et le cas échéant le repose-pied 50 et l'appui-tête 40, et les accoudoirs 16, 17, peuvent comprendre chacun un coussin. Le coussin peut être fabriqué dans un matériau tel qu'un tissu doux, ou dans du plastique ou du cuir. Un coussin comprend une mousse, la mousse étant conçue pour être jointive avec la mousse d'un coussin adjacent. Ainsi, le passager ne sent pas sous lui la jonction entre les différentes mousses et les différents coussins, ce qui augmente son confort. Les surfaces de ces éléments destinées à être au contact du passager peuvent être formées par des surfaces de coussins respectifs. Chacune de ces surfaces peut être sensiblement plane, ou encore légèrement bombée.

L'ensemble formé par le cale-rein 20, l'assise 10 et le repose-jambe 30 lorsque l'unité de siège est dans la première configuration peut présenter une longueur comprise entre 30 pouces et 60 pouces, de préférence entre 40 pouces et 55 pouces, cette longueur étant appelée longueur de l'unité de siège. En particulier, la longueur de l'unité de siège peut être de 50 pouces, ou encore être de 44 pouces. Une longueur de 50 pouces augmente la dimension de l'unité de siège, la surface définie par l'assise 10 et la surface de lit, et augmente ainsi le confort du passager. Une longueur de 44 pouces permet une compatibilité de l'unité de siège avec les contraintes et normes de dimensionnement des cabines actuelles.

L'unité de siège peut comprendre en outre un panneau avant 110. Le panneau avant 110 peut s'étendre sensiblement dans le plan vertical. Le panneau avant 110 peut être situé en une position plus avant que l'assise 10 de l'unité de siège.

Le panneau avant 110 peut comprendre une première partie 111 et une deuxième partie 112, les deux parties 111, 112 étant adjacentes et orientées sensiblement suivant le plan vertical. La deuxième partie 112 forme un renfoncement vers l'avant par rapport à la première partie 111.

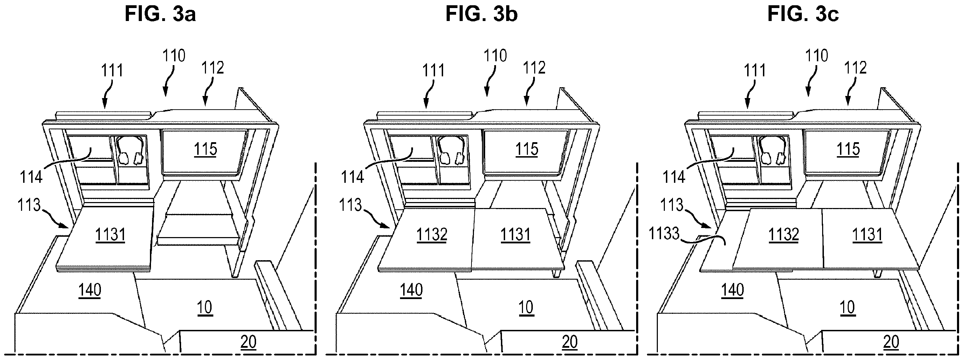

L'unité de siège peut comprendre en outre une tablette 113 adaptée pour être montée sur le panneau avant 110 de sorte à être mobile en rotation autour d'un premier axe de rotation entre une position rabattue dans laquelle la tablette 113 est rabattue contre le panneau avant 110 et une position ouverte dans laquelle la tablette 113 est disposée sensiblement parallèlement à l'assise 10 de sorte à former une surface de travail pour le passager. En particulier, la tablette 113 peut être rapportée sur la première partie 111 du panneau avant 110. Une tablette d'unité de siège est illustrée à titre d'exemple non limitatif en figures 3a, 3b et 3c.

La tablette 113 peut comprendre un premier plateau 1131, un deuxième plateau 1132 et un troisième plateau 1133, les plateaux étant superposés, c'est-à-dire empilés les uns sur les autres, le deuxième plateau 1132 étant pris en sandwich entre le premier plateau 1131 et l troisième plateau 1133. Les trois plateaux de la tablette 113 peuvent pivoter d'un seul bloc entre la position rabattue et la position ouverte.

Le premier axe de rotation de la tablette 113 peut être parallèle à l'axe de jonction entre le cale-rein et l'assise 29. Ainsi, la tablette 113, en particulier chacune de ses plateaux, peut s'étendre sensiblement dans un plan vertical lorsque la tablette 113 est dans la position rabattue, et dans un plan horizontal lorsque la tablette 113 est dans la position ouverte.

Le premier plateau 1131 peut être montée mobile en rotation autour d'un deuxième axe de rotation perpendiculaire au premier axe de rotation. Le deuxième axe de rotation peut correspondre sensiblement à l'axe longitudinal. Ainsi, lorsque la tablette 113 est dans la position ouverte, le premier plateau 1131 peut être déplié pour former avec le deuxième plateau 1132 une surface sensiblement plane horizontale et continue, le deuxième plateau 1132 étant positionné au contact du troisième plateau 1133 et recouvrant le troisième plateau 1133. Le premier plateau 1131 de la tablette 113 peut être raccordé au deuxième plateau 1132 par le biais de gonds.

Le deuxième plateau 1132 est adapté pour être monté coulissant selon le premier axe. Ainsi, lorsque la tablette 113 est dans la position ouverte et que le premier plateau 1131 est déplié, le deuxième plateau 1132 peut être déployé pour découvrir au moins partiellement, voire entièrement, le troisième plateau 1133. Le deuxième plateau 1132 peut par exemple être monté coulissant sur le troisième plateau 1133 par le biais de rails situés sur le premier plateau 1131 ou latéralement au troisième plateau 1133, les rails guidant le coulissement du deuxième plateau 1132.

Lorsque le premier plateau 1131 est déplié et que le deuxième plateau 1132 est déployé, le premier plateau 1131 et le deuxième plateau 1132 forment une surface sensiblement horizontale et continue, et le troisième plateau 1133 est au moins partiellement, voire complètement, découvert. La surface de travail totale disponible pour le passager dans cette configuration de la tablette 113 est donc augmentée. En outre, cette surface de travail est facilement reconfigurable par le passager en fonction de ses activités lors du vol, par de simples rotation et coulissement des plateaux.

Pour rabattre la tablette 113 lorsque celle-ci est pleinement déployée, le deuxième plateau 1132 est translaté suivant le premier axe, puis le premier plateau 1131 est replié par une rotation autour du deuxième axe, et enfin le bloc formé des trois plateaux est rabattu par une rotation autour du premier axe. La cinématique inverse permet de passer d'une tablette 113 rabattue à une tablette 113 pleinement déployée.

Par ailleurs, le panneau avant 110 peut présenter un espace de rangement 114, l'espace de rangement 114 étant recouvert par la tablette 113 dans la position rabattue, et découvert lorsque la tablette 113 est dans la position ouverte. Ainsi, l'espace de rangement 114 est accessible au passager la tablette 113 est dans la position ouverte. Cet espace de rangement 114 peut être utilisé pour stocker des objets mis à la disposition du passager pendant le vol, tel que des écouteurs, ou des kits de sommeil. Le passager peut également y stocker des affaires personnelles.

Le panneau avant 110 peut présenter un renfoncement adapté pour installer un écran physique 115. Ce renfoncement peut correspondre à la deuxième partie 112 du panneau avant 110. Le renfoncement peut être situé sensiblement à la verticale du repose-pied 50 lorsque l'unité de siège comprend un repose-pied 50.

L'écran 115 peut être monté à rotation selon un axe de rotation de l'écran 119, de sorte à être inclinable par rapport au plan formé par le panneau avant 110. Par exemple, l'axe de rotation de l'écran 119 peut être sensiblement parallèle à l'axe de jonction entre le cale-rein et l'assise 29. Ainsi, l'inclinaison de l'écran 115 peut être adaptée en fonction du gabarit du passager, de sa position dans l'unité de siège, etc. Un écran inclinable 115 rapporté sur un panneau avant 110 est illustré à titre d'exemple non limitatif en figures 4a et 4b.

L'écran 115 peut être incliné vers l'avant, de sorte à libérer de l'espace à proximité du repose-pied 50, par exemple pour les genoux d'un passager assis dans l'unité de siège. Par ailleurs, l'écran 115 est alors positionné de façon plus adaptée en regard des yeux d'un passager qui est lui-même incliné, par exemple lorsque l'unité de siège est dans une configuration intermédiaire entre la configuration redressée et la configuration lit. L'écran 115 peut être incliné vers l'avant jusqu'à un angle d'environ 30°, par exemple d'environ 22°.

L'écran 115 peut être incliné vers l'avant, par exemple pour être positionné de façon plus adaptée en regard des yeux d'un passager de grande taille, assis dans une unité de siège dans une configuration redressée. L'écran 115 peut être incliné vers l'arrière jusqu'à un angle d'environ 20°, par exemple d'environ 7°.

L'unité de siège peut comprendre en outre un ou plusieurs panneaux latéraux 120 adaptés pour délimiter latéralement l'unité de siège. Les panneaux latéraux 120 délimitent une largeur de l'unité de siège. Les panneaux latéraux 120 peuvent être parallèles et espacés d'une distance supérieure à la distance séparant les accoudoirs 16, 17.

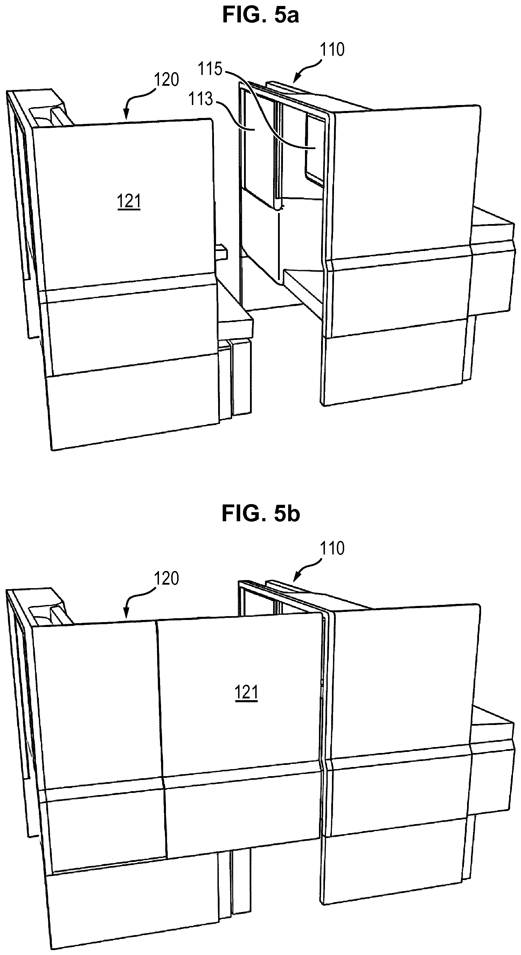

Un panneau latéral 120 peut comprendre une porte privative 121 adaptée pour être montée sur le panneau latéral 120 coulissante selon un axe longitudinal de l'unité de siège. Une porte privative 121 rapportée sur un panneau latéral 120 est illustrée à titre d'exemple non limitatif en figures 5a et 5b. La porte privative 121 peut être coulissée entre une position où la porte couvre le panneau latéral 120, la porte privative 121 formant alors une épaisseur supplémentaire au contact du panneau latéral 120, et une position où la porte privative 121 découvre le panneau latéral 120, la porte privative 121 prolongeant alors le panneau latéral 120, de sorte que le passager dispose alors d'un espace privé séparé du reste de la cabine.

La porte privative 121 peut être enchâssée sur le panneau latéral 120. Ainsi, l'ensemble formé du panneau latéral 120 et de la porte privative 121 présente une épaisseur plus faible qu'un ensemble comportant une porte prise en sandwich entre deux parois d'un caisson de panneau latéral 120. La masse et le coût de l'ensemble est donc diminué. Par ailleurs, la porte privative 121 constitue un module indépendant qui peut être rapporté sur le panneau ou non, selon les besoins de l'agencement de la cabine.

L'unité de siège peut comprendre un rétroprojecteur. Le rétroprojecteur peut être intégré à un panneau avant 110 d'une unité de siège arrière adjacente. L'écran 115 physique est alors supprimé, et le renfoncement du panneau avant 110 où se trouve l'écran 115 physique peut être libéré, de sorte à augmenter l'espace disponible pour le passager.

Une projection peut être effectuée sur une surface de projection sensiblement plane située devant le passager. La surface de projection peut couvrir une partie ou toute la largeur du siège, la surface de projection étant ainsi augmentée par rapport à la surface d'un écran 115 physique. La surface de projection peut par exemple être celle d'une ou de plusieurs tablettes rabattables. Une tablette 113 est mobiles en rotation entre une position verticale dans laquelle la tablette 113 forme une surface de projection, et une position horizontale dans laquelle la tablette 113 forme une surface de travail de dimensions conséquentes, la surface de projection étant alors assurée par le panneau avant 110.

La surface de projection peut être comprise entre 20 pouces et 50 pouces, et peut de préférence avoisiner les 39 pouces. Ainsi, la surface de projection est bien supérieure à la surface d'un écran 115 physique tel qu'intégré dans une unité de siège classique.

L'unité de siège peut comprendre en outre un module de coque. Le module de coque peut comprendre un support d'assise 130 adapté pour être positionné sous l'assise 10, et/ou des panneaux latéraux 120 adaptés pour délimiter latéralement l'unité de siège, et/ou un pupitre 140 arrière adapté pour définir un repose-pied 50 d'une unité de siège arrière adjacente, et/ou un module arrière 150 adapté pour définir un panneau avant 110 d'une unité de siège arrière adjacente.

Le support d'assise 130 peut se présenter sous forme d'un caisson situé sous l'assise 10. Le pupitre 140 arrière peut définir une saillie située en avant par rapport au module arrière 150, et être situé sensiblement au niveau d'un coude d'un passager assis dans l'unité de siège dans la configuration redressée. Le module arrière 150 peut présenter une partie située en retrait de sorte à recevoir le cale-rein 20 dans la configuration lit de l'unité de siège.

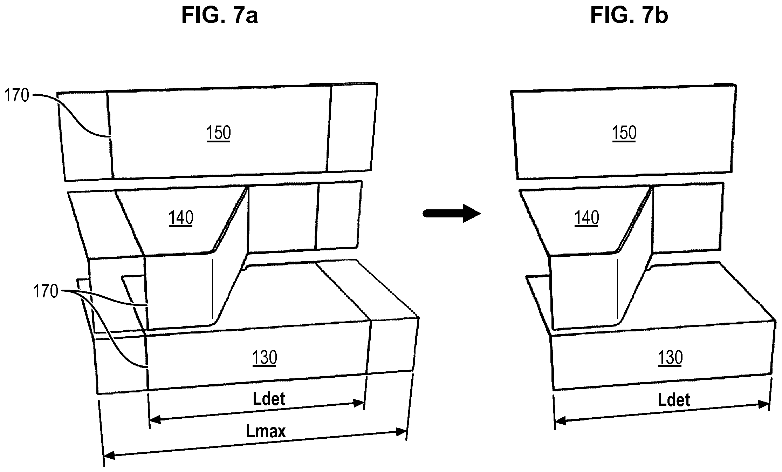

Le support d'assise 130 et/ou les panneaux latéraux 120 et/ou le pupitre 140 et/ou le module arrière 150 peuvent présenter une dimension selon l'axe de jonction entre le cale-rein et l'assise 29, en d'autres termes une largeur, qui est adaptable. Les figures 7a et 7b illustrent un exemple non limitatif d'un module de coque pour une unité de siège présentant une largeur adaptable. La largeur du module de coque peut ainsi être adaptée en fonction d'une largeur de cabine dans laquelle l'unité de siège est agencée. L'unité de siège peut donc être installée sur un grand nombre de types d'aéronefs existants présentant différentes largeurs de cabines.

Un seul module de coque d'unité de siège, représentée à titre d'exemple non limitatif en figures 6, 7a et 7b, nécessite d'être conçu et fabriqué. Le module de coque peut par exemple être fabriqué par moulage. Le module de coque fabriqué correspond au plus grand gabarit en largeur de chacun de ses éléments, à savoir à une largeur maximale de son support d'assise 130 et/ou de ses panneaux latéraux 120 et/ou de son pupitre 140 et/ou de son module arrière 150. Le module de coque fabriqué présente donc une largeur maximale de module de coque Lmax.

Le module de coque peut présenter une ou plusieurs zones de découpe 170, s'étendant dans la direction longitudinale. Les lignes de découpe correspondent à une ou plusieurs largeurs de module de coque possibles, inférieures à la largeur maximale de module de coque Lmax.

Une largeur de module de coque déterminée Ldet correspondant à une largeur de module de coque compatible d'une largeur d'une cabine dans lequel le module de coque est destiné à être agencé est déterminée. Le module de coque unique fabriqué peut ensuite être découpé le long de ses lignes de découpe, lorsque la largeur maximale de module de coque Lmax est supérieure à la largeur de module de coque déterminée Ldet.

Les coûts de développement et de fabrication de l'unité de siège sont sensiblement réduits, du fait qu'un seul module de coque est conçu et développé, puis découpé pour en adapter la largeur.

Il est également possible de prévoir que le pupitre 140 soit orientable dans le plan horizontal, de sorte à permettre une adaptation angulaire du module de coque à la section de l'avion. L'orientation du pupitre 140 dans le plan horizontal modifie la démarcation avec l'assise 10, et l'orientation du repose-pied de l'unité de siège arrière adjacente.

Un procédé de fabrication d'un module de coque d'une unité de siège passager pour une cabine d'aéronef peut comprendre les étapes suivantes :
- fabrication d'un module de coque présentant une largeur maximale de module de coque Lmax,
- détermination d'une largeur de module de coque Ldet, la largeur de module de coque déterminée Ldet étant adaptée pour être compatible d'une largeur de la cabine d'aéronef dans laquelle le module de coque est destiné à être agencé,
- lorsque la largeur de module de coque déterminée Ldet est inférieure à la largeur maximale de module de coque Lmax, découpe du module de coque de sorte à obtenir un module de coque présentant une largeur sensiblement égale à la largeur déterminée Ldet.

Dans une première variante de réalisation, l'unité de siège comprend un panneau avant 110 du type décrit ci-dessus et comprend une tablette 113 mobile entre la première position et la deuxième position. Lorsque la tablette 113 est dans la deuxième position, le troisième plateau 1133 de la tablette peut reposer sur le pupitre 140 arrière. Ainsi, la stabilité de la tablette 113 est améliorée, ce qui permet au passager de mettre davantage de poids sur la tablette 113.

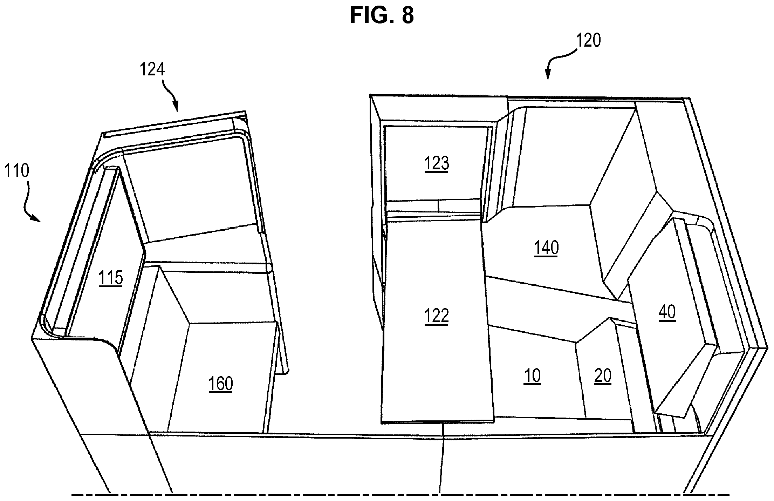

Dans une deuxième variante de réalisation, illustré à titre d'exemple non limitatif en figure 8, l'unité de siège définit une mini-suite. En particulier, cela peut être le cas pour une unité de siège disposée au niveau d'une rangée la plus avant de l'avion. En effet, un supplément de longueur est disponible au niveau de la rangée la plus avant de l'avion.

La longueur totale de la mini-suite peut être supérieure à la longueur de l'unité de siège selon la première variante de réalisation. Les panneaux latéraux de la mini-suite présentent une longueur supérieure à la longueur des panneaux latéraux 120 d'une unité de siège selon la première variante de réalisation. Des tablettes latérales 122 peuvent être rapportées sur l'un et/ou l'autre des panneaux latéraux 120, les tablettes latérales 122 étant mobiles en rotation autour de l'axe longitudinal entre une position verticale rabattue et une position horizontale déployée. Les tablettes latérales 122 peuvent en particulier présenter une structure sensiblement similaire à la structure de la tablette 113 du panneau avant 110, de sorte à pouvoir former une surface de travail modulaire. Des espaces de rangement 123 peuvent être ménagés dans les panneau latéraux, les espaces de rangement 123 étant accessibles au passager lorsque les tablettes latérales 122 sont en position déployée.

Le panneau avant de la mini-suite peut présenter un renfoncement adapté pour accueillir un siège passager supplémentaire 160, situé en regard du cale-rein 20, de l'assise 10 et du repose-jambe 30 formant l'unité de siège passager principale décrite ci-dessus. Le siège passager supplémentaire 160 peut se présenter par exemple sous la forme d'une banquette comprenant un cale-rein et une assise fixes, ou d'une unité de siège sensiblement similaire à l'unité de siège principale. Un écran physique 115 peut être rapporté sur le panneau avant au-dessus du cale-rein du siège passager supplémentaire 160, l'écran 115 s'étendant sensiblement dans le plan vertical. En variante, la surface formée par le panneau avant au-dessus du cale-rein du siège passager supplémentaire 160 peut former une surface de projection pour un rétroprojecteur rapporté sur un module arrière 150 de l'.

Le siège passager supplémentaire 160 peut comprendre un repose-jambe mobile entre une position verticale et une position horizontale. Dans la position horizontale, le repose-jambe du siège passager supplémentaire 160 forme une surface sensiblement horizontale et continue avec l'assise du siège supplémentaire 160. Lorsque repose-jambe du siège supplémentaire 160 est en position horizontale et que le repose-jambe 30 de l'unité de siège principale est dans la deuxième position, les deux repose-jambe peuvent former une surface sensiblement horizontale et continue. Ainsi, le passager dispose d'un lit présentant une surface, et notamment une longueur, encore augmentée.

Une porte privative coulissante peut être rapportée sur une paroi latérale du panneau avant 124. La porte privative peut coulisser de sorte à prolonger la paroi latérale du panneau avant 124. Ainsi, l'espace constituant la mini-suite peut être totalement isolé du reste de la cabine, ce qui offre au passager un confort encore amélioré.

Le panneau arrière de la mini suite peut définir un panneau avant 110 d'une unité de siège selon la première variante de réalisation, agencée à l'arrière de la mini-suite.

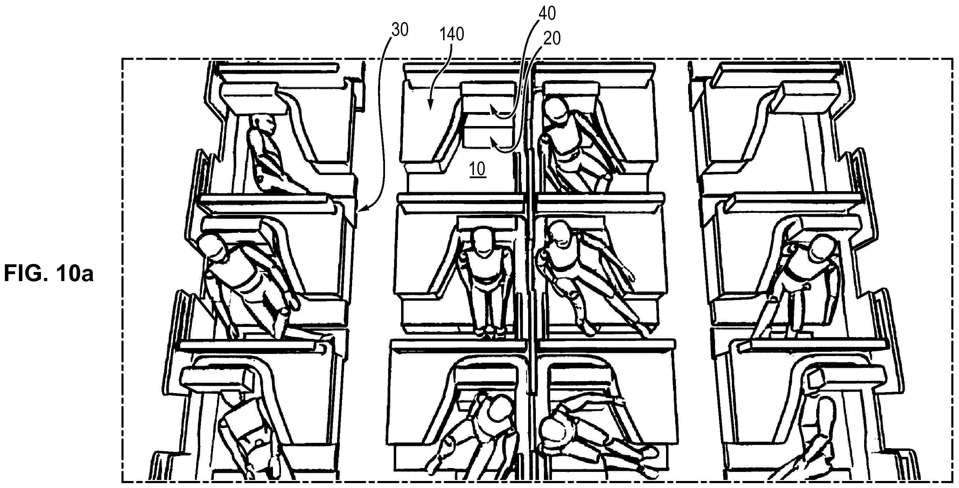

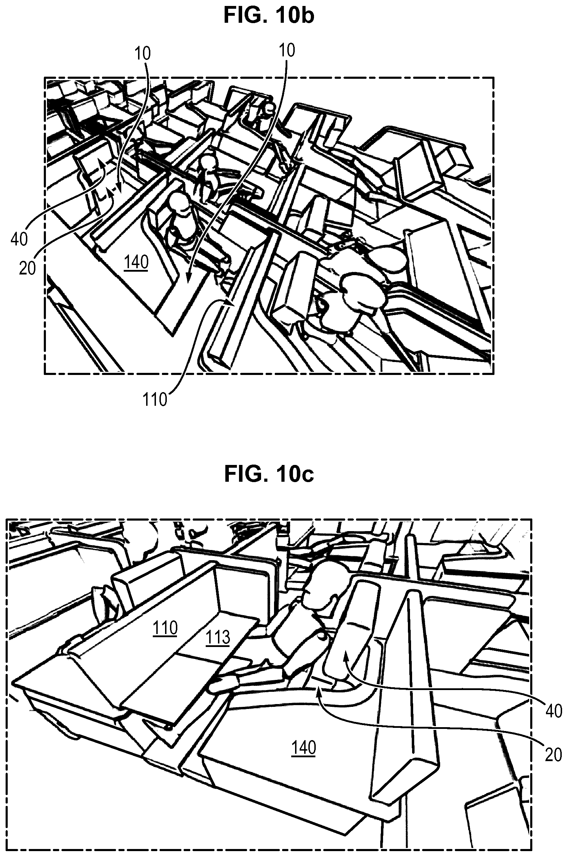

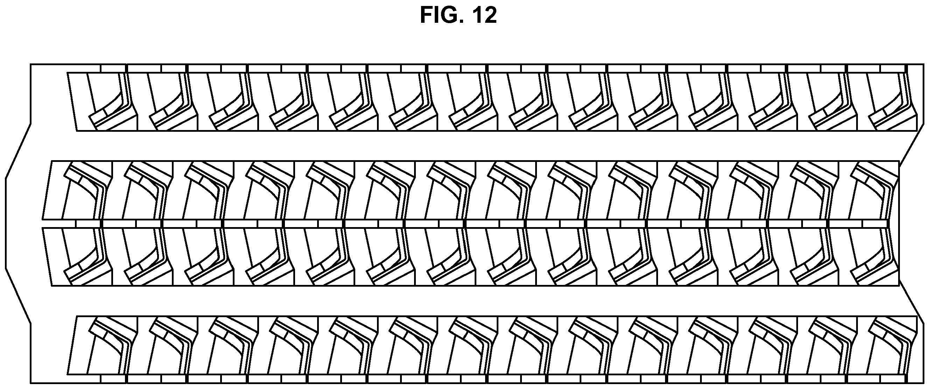

Plusieurs unités de siège passager peuvent être agencés pour former un agencement d'une pluralité d'unités de siège passager, ainsi que représenté à titre d'exemple non limitatif en figures 10a à 10c, et 12.

L'agencement d'unités de siège passager est destiné à être installé dans une cabine d'aéronef. La cabine peut comprendre plusieurs rangées d'unités de siège, chaque rangée pouvant comprendre par exemple deux unités de siège, ou quatre unités de siège. La cabine présente un axe de cabine s'étendant depuis un nez de l'aéronef vers une queue de l'aéronef.

Selon un premier exemple de réalisation, illustré à titre d'exemple non limitatif en figures 10a à 10c, 11a et 12, les unités de sièges sont disposées parallèlement les unes derrière les autres (configuration « herringbone »). L'axe longitudinal l1 d'une unité de siège est alors parallèle à l'axe longitudinal l2 d'une unité de siège arrière adjacente. L'axe longitudinal l1, l2 d'unité de siège peut correspondre à un axe de cabine. Ainsi, la surface de lit d'une unité de siège dans la configuration lit s'étend sensiblement en diagonale par rapport à l'axe de cabine et à l'axe longitudinal de l'unité de siège, les surfaces de lit des unités de siège étant ainsi disposées en épi.

Deux unités de unités de sièges disposées de part et d'autre de l'axe de cabine peuvent être disposées en miroir l'une de l'autre. Ainsi, la surface de lit d'une unité de siège d'un côté de l'axe de cabine s'étend en diagonale suivant une orientation opposée à la surface de lit d'une unité de siège située de l'autre côté de l'axe de cabine.

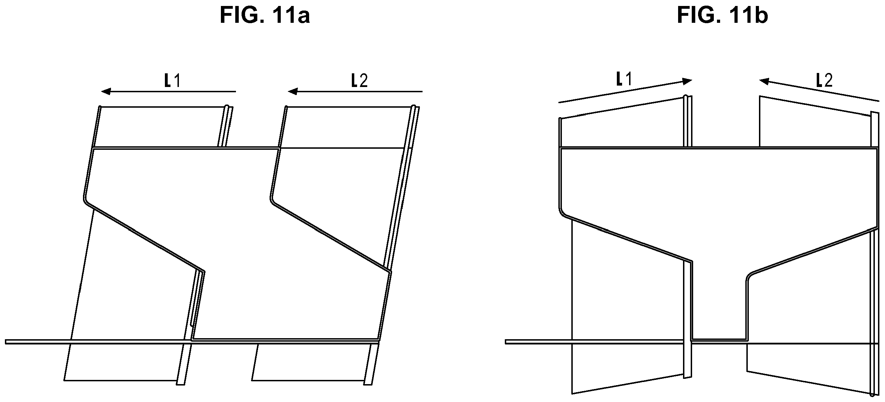

Selon un deuxième exemple de réalisation, illustré à titre d'exemple non limitatif sur la figure 11b, les unités de siège peuvent être disposées en quinconce (configuration « staggered »). L'axe longitudinal l1 d'une unité de siège peut alors présenter une inclinaison par rapport à l'axe de cabine, et l'axe longitudinal l2 d'une unité de siège arrière adjacente peut présenter une inclinaison opposée par rapport à l'axe de cabine. Deux unités de unités de sièges disposées à l'avant et à l'arrière l'une de l'autre sont alors disposées en miroir l'une de l'autre. Ainsi, la surface de lit d'une unité de siège dans la configuration lit s'étend sensiblement dans la direction de l'axe de cabine.

Une unité de siège peut être ancrée sur des rails de cabine situés sous le module d'assise 10, en particulier par le biais d'une structure basse de l'unité de siège. La structure basse peut être disposée sous la structure d'assise 130 et/ou le pupitre 140, et comprendre une liaison mécanique supérieure et des pieds adaptés pour être ancrés dans les rails de cabine, en particulier deux pieds adaptés pour être ancrés dans deux rails de cabine disposés parallèlement à l'axe de cabine. La liaison mécanique supérieure peut par exemple comprendre deux tubes parallèles, qui peuvent être disposés sensiblement perpendiculairement par rapport aux rails de cabine. Les pieds peuvent être raccordés à la liaison mécanique supérieure, en particulier être montés coulissants le long des tubes de sorte à adapter leur position et leur écartement en fonction de la disposition des rails de cabine où ils doivent s'ancrer. Ainsi, la structure basse permet d'adapter l'ancrage de l'unité de siège à différents espacements de rails de cabine, l'espacement des rails étant susceptible de varier en fonction du type d'aéronef et/ou de la position centrale ou latérale de l'unité de siège dans la cabine.

L'ancrage de l'unité de siège présente une masse et une complexité sensiblement réduites par rapport à une unité de siège présentant une cinématique de déploiement. En effet, l'unité de siège est bien plus légère qu'une unité de siège présentant une cinématique de déploiement.

## Revendications

1. Unité de siège passager pour une cabine d'aéronef, comprenant une assise (10), un cale-rein (20) monté mobile entre une première position et une deuxième position, et un repose-jambe (30) monté mobile entre une première position et une deuxième position, l'unité de siège étant orientée selon un axe longitudinal de l'unité de siège, l'unité de siège présentant :
- une configuration redressée dans laquelle le cale-rein (20) et le repose-jambe (30) sont dans la première position, et
- une configuration lit dans laquelle le cale-rein (20) et le repose-jambe (30) sont dans la deuxième position, le cale-rein (20), l'assise (10) et le repose-jambe (30) formant une surface sensiblement plane et continue,
dans laquelle :
- l'assise (10) est fixe,
- le cale-rein (20) est monté mobile en rotation entre la première position et la deuxième position autour d'un axe de jonction entre le cale-rein et l'assise (29), le cale-rein (20) étant adapté pour accueillir un dos d'un passager lorsque le cale-rein (20) est dans la première position et une tête d'un passager lorsque le cale-rein (20) est dans la deuxième position,
- le repose-jambe (30) est monté mobile en rotation entre la première position et la deuxième position autour d'un axe de jonction entre le repose-jambe et l'assise (39),
l'unité de siège passager étant **caractérisée en ce que** l'assise (10) présente une dimension dans la direction de l'axe de jonction entre le cale-rein et l'assise (29), appelée largeur, qui est supérieure à une largeur du cale-rein (20), et **en ce que** l'assise (10) présente une forme évasée vers l'avant, un premier bord latéral de l'assise (13) étant aligné avec l'axe longitudinal de l'unité de siège, et un deuxième bord latéral de l'assise (14) étant disposé en diagonale par rapport à l'axe longitudinal de l'unité de siège.

2. Unité de siège passager selon la revendication 1, dans laquelle le cale-rein (20) et le repose-jambe (30) sont montés mobiles en rotation autour de liaisons pivot respectives, et dans laquelle la rotation du cale-rein (20) est indépendante de la rotation du repose-jambe (30).

3. Unité de siège passager selon l'une des revendications 1 ou 2, comprenant en outre un appui-tête (40) monté mobile en rotation entre une première position et une deuxième position, dans laquelle lorsque l'unité de siège est dans la configuration redressée, le cale-rein (20) et l'appui-tête (40) sont dans la première position et forment une surface sensiblement plane et continue, et dans laquelle la rotation de l'appui-tête (40) est indépendante de la rotation du cale-rein (20) et de la rotation du repose-jambe (30).

4. Unité de siège passager selon l'une des revendications 1 à 3, comprenant en outre un repose-pied (50) adapté pour être séparé de l'assise (10) d'une distance correspondant sensiblement à une dimension du repose-jambe (30), de sorte que lorsque l'unité de siège est dans la configuration lit, le cale-rein (20), l'assise (10), le repose-jambe (30) et le repose-pied (50) forment une surface sensiblement plane et continue.

5. Unité de siège passager selon l'une des revendications 1 à 4, comprenant deux accoudoirs (16, 17) délimitant latéralement l'assise (10), dans laquelle l'un des deux accoudoirs (16, 17) est un accoudoir longitudinal (16) disposé au niveau du premier bord latéral de l'assise (13), et l'autre des deux accoudoirs (16, 17) est un accoudoir diagonal (17) disposé au niveau d'au moins une partie du deuxième bord latéral de l'assise (14).

6. Unité de siège passager selon l'une des revendications 1 à 5, comprenant en outre un panneau avant (110) et une tablette (113) adaptée pour être montée sur le panneau avant (110) de sorte à être mobile en rotation autour d'un premier axe de rotation entre une position rabattue dans laquelle la tablette (113) est rabattue contre le panneau avant (110) et une position ouverte dans laquelle la tablette (113) est disposée sensiblement parallèlement à l'assise (10) de sorte à former une surface de travail pour le passager, dans laquelle dans la configuration lit, le cale-rein (20), l'assise (10) et le repose-jambe (30) forment une surface s'étendant sensiblement dans un plan horizontal, le panneau avant (110) s'étendant sensiblement dans un plan vertical perpendiculaire au plan horizontal, et dans laquelle la tablette (113) s'étend sensiblement dans un plan vertical lorsque la tablette (113) est dans la position rabattue et dans un plan horizontal lorsque la tablette (113) est dans la position ouverte.

7. Unité de siège passager selon la revendication 6, dans laquelle la tablette (113) comprend un premier plateau (1131), un deuxième plateau (1132) et un troisième plateau (1133), les plateaux étant superposées, dans laquelle le premier plateau (1131) est adapté pour être monté mobile en rotation autour d'un deuxième axe de rotation perpendiculaire au premier axe de rotation, et le deuxième plateau (1132) est adapté pour être monté coulissant selon le premier axe.

8. Unité de siège passager selon l'une des revendications 1 à 7, comprenant en outre un panneau avant (110), le panneau avant (110) présentant un renfoncement adapté pour installer un écran (115), dans laquelle l'écran (115) est adapté pour être inclinable par rapport au plan formé par le panneau avant (110).

9. Unité de siège passager selon l'une des revendications 1 à 8, comprenant en outre un panneau latéral (120) adapté pour délimiter latéralement l'unité de siège, et comprenant en outre une porte privative (121) adaptée pour être montée sur le panneau latéral (120) coulissante selon un axe longitudinal de l'unité de siège.

10. Unité de siège passager selon la revendication 9, dans laquelle la porte privative coulissante (121) est enchâssée sur le panneau latéral (120).

11. Unité de siège passager selon l'une des revendications 1 à 10, comprenant en outre un module de coque comprenant un support d'assise (130) adapté pour être positionné sous l'assise (10), des panneaux latéraux (120) adaptés pour délimiter latéralement l'unité de siège, un pupitre (140) arrière adapté pour définir un repose-pied (50) d'une unité de siège arrière adjacente, et un module arrière (150) adapté pour définir un panneau avant (110) d'une unité de siège arrière adjacente.

12. Unité de siège passager selon la revendication 11, dans laquelle le module de coque présente une ou plusieurs lignes de découpe (170) s'étendant dans la direction longitudinale, les lignes de découpe correspondant à une ou plusieurs largeurs de module de coque possibles, le support d'assise (130) et/ou les panneaux latéraux (120) et/ou le pupitre (140) et/ou le module arrière (150) présentant une dimension selon l'axe de jonction entre le cale-rein et l'assise (29) qui est adaptable.

13. Agencement d'unités de siège passager pour une cabine d'aéronef, comprenant une pluralité d'unités de siège passager selon l'une des revendications 1 à 12, les unités de siège passager étant disposées parallèlement les unes derrière les autres, de sorte que la surface de lit s'étend en diagonale par rapport à un axe longitudinal de l'unité de siège et que l'axe longitudinal de l'unité de siège est adapté pour être parallèle à un axe de la cabine dans laquelle l'unité de siège est agencée.

14. Agencement d'unités de siège passager pour une cabine d'aéronef, comprenant une pluralité d'unités de siège passager selon l'une des revendications 1 à 12, les unités de siège passager étant disposées en quinconce, de sorte que la surface de lit s'étend parallèlement à un axe de l'unité de siège et que l'axe longitudinal (l1) d'une unité de siège est adapté pour présenter une inclinaison par rapport à un axe de la cabine dans laquelle l'unité de siège est agencée, et l'axe longitudinal (l2) d'une unité de siège arrière adjacente est adapté pour présenter une inclinaison opposée par rapport à l'axe de la cabine.

15. Procédé de fabrication d'une unité de siège passager pour une cabine d'aéronef selon la revendication 11, le procédé comprenant les étapes suivantes :
- fabrication d'un module de coque présentant une largeur maximale de module de coque (Lmax),
- détermination d'une largeur de module de coque (Ldet), la largeur de module de coque déterminée (Ldet) étant adaptée pour être compatible d'une largeur de la cabine d'aéronef dans laquelle le module de coque est destiné à être agencé,
- lorsque la largeur de module de coque déterminée (Ldet) est inférieure à la largeur maximale de module de coque (Lmax), découpe du module de coque le long d'un ligne de découpe du module de coque, de sorte à obtenir un module de coque présentant une largeur sensiblement égale à la largeur déterminée (Ldet).

## Patentansprüche

1. Passagiersitzeinheit für eine Flugzeugkabine, umfassend eine Sitzfläche (10), eine Lendenwirbelstütze (20), die zwischen einer ersten Position und einer zweiten Position beweglich montiert ist, und eine Beinablage (30), die zwischen einer ersten Position und einer zweiten Position beweglich montiert ist, wobei die Sitzeinheit entlang einer Längsachse der Sitzeinheit ausgerichtet ist, wobei die Sitzeinheit Folgendes aufweist:
- eine aufgerichtete Konfiguration, in der sich die Lendenwirbelstütze (20) und die Beinablage (30) in der ersten Position befinden, und
- eine Liegekonfiguration, in der sich die Lendenwirbelstütze (20) und die Beinablage (30) in der zweiten Position befinden, wobei die Lendenwirbelstütze (20), die Sitzfläche (10) und die Beinablage (30) eine im Wesentlichen ebene und durchgehende Fläche bilden, bei der:
- die Sitzfläche (10) fixiert ist,
- die Lendenwirbelstütze (20) zwischen der ersten Position und der zweiten Position um eine Verbindungsachse zwischen der Lendenwirbelstütze und der Sitzfläche (29) drehbeweglich montiert ist, wobei die Lendenwirbelstütze (20) so ausgelegt ist, dass sie den Rücken eines Passagiers stützt, wenn sich die Lendenwirbelstütze (20) in der ersten Position befindet, und den Kopf eines Passagiers, wenn sich die Lendenwirbelstütze (20) in der zweiten Position befindet,
- die Beinablage (30) zwischen der ersten Position und der zweiten Position um eine Verbindungsachse zwischen der Beinablage und der Sitzfläche (39) drehbeweglich montiert ist,
wobei die Passagiersitzeinheit **dadurch gekennzeichnet ist, dass** die Sitzfläche (10) in Richtung der Verbindungsachse zwischen der Lendenwirbelstütze und der Sitzfläche (29) eine als Breite bezeichnete Abmessung aufweist, die größer ist als eine Breite der Lendenwirbelstütze (20), und dass die Sitzfläche (10) eine nach vorne ausgestellte Form aufweist, wobei eine erste Seitenkante der Sitzfläche (13) mit der Längsachse der Sitzeinheit ausgerichtet ist und eine zweite Seitenkante der Sitzfläche (14) diagonal in Bezug auf die Längsachse der Sitzeinheit angeordnet ist.

2. Passagiersitzeinheit nach Anspruch 1, bei der die Lendenwirbelstütze (20) und die Beinablage (30) um jeweilige Schwenkverbindungen drehbeweglich montiert sind und bei der die Drehung der Lendenwirbelstütze (20) unabhängig von der Drehung der Beinablage (30) ist.

3. Passagiersitzeinheit nach einem der Ansprüche 1 oder 2, ferner umfassend eine Kopfstütze (40), die zwischen einer ersten Position und einer zweiten Position drehbeweglich montiert ist, bei der, wenn die Sitzeinheit sich in der aufgerichteten Konfiguration befindet, die Lendenwirbelstütze (20) und die Kopfstütze (40) sich in der ersten Position befinden und eine im Wesentlichen ebene und durchgehende Fläche bilden und bei der die Drehung der Kopfstütze (40) unabhängig von der Drehung der Lendenwirbelstütze (20) und der Drehung der Beinablage (30) ist.

4. Passagiersitzeinheit nach einem der Ansprüche 1 bis 3, ferner umfassend eine Fußablage (50), die so ausgelegt ist, dass sie um einen Abstand von der Sitzfläche (10) getrennt werden kann, der im Wesentlichen einer Abmessung der Beinablage (30) entspricht, so dass, wenn die Sitzeinheit sich in der Liegekonfiguration befindet, die Lendenwirbelstütze (20), die Sitzfläche (10), die Beinablage (30) und die Fußablage (50) eine im Wesentlichen ebene und durchgehende Fläche bilden.

5. Passagiersitzeinheit nach einem der Ansprüche 1 bis 4, umfassend zwei Armlehnen (16, 17), die die Sitzfläche (10) seitlich begrenzen, wobei eine der beiden Armlehnen (16, 17) eine Längsarmlehne (16) ist, die auf Höhe der ersten Seitenkante der Sitzfläche (13) angeordnet ist, und die andere der beiden Armlehnen (16, 17) eine Diagonalarmlehne (17) ist, die auf Höhe des mindestens einen Teils der zweiten Seitenkante der Sitzfläche (14) angeordnet ist.

6. Passagiersitzeinheit nach einem der Ansprüche 1 bis 5, ferner umfassend ein Frontpaneel (110) und eine Tischplatte (113), die so ausgelegt ist, dass sie am Frontpaneel (110) montierbar ist, so dass sie drehbeweglich um eine erste Drehachse zwischen einer hochgeklappten Position, in der die Tischplatte (113) an dem Frontpaneel (110) hochgeklappt ist, und einer geöffneten Position ist, in der die Tischplatte (113) im Wesentlichen parallel zur Sitzfläche (10) angeordnet ist, um so eine Arbeitsfläche für den Passagier zu bilden, wobei die Lendenwirbelstütze (20), die Sitzfläche (10) und die Beinablage (30) in der Liegekonfiguration eine Fläche bilden, die sich im Wesentlichen in einer horizontalen Ebene erstreckt, wobei sich das Frontpaneel (110) im Wesentlichen in einer vertikalen Ebene senkrecht zur horizontalen Ebene erstreckt, und wobei die Tischplatte (113) sich im Wesentlichen in einer vertikalen Ebene erstreckt, wenn sich die Tischplatte (113) in der hochgeklappten Position befindet, und in einer horizontalen Ebene, wenn sich die Tischplatte (113) in der geöffneten Position befindet.

7. Passagiersitzeinheit nach Anspruch 6, bei der die Tischplatte (113) eine erste Platte (1131), eine zweite Platte (1132) und eine dritte Platte (1133) umfasst, wobei die Platten überlappend sind, wobei die erste Platte (1131) so ausgelegt ist, dass sie um eine zweite Drehachse senkrecht zur ersten Drehachse drehbeweglich montierbar ist, und die zweite Platte (1132) so ausgelegt ist, dass sie entlang der ersten Achse verschiebbar montierbar ist.

8. Passagiersitzeinheit nach einem der Ansprüche 1 bis 7, ferner umfassend ein Frontpaneel (110), wobei das Frontpaneel (110) eine Aussparung aufweist, die so ausgelegt ist, dass ein Bildschirm (115) in ihr eingebaut ist, wobei der Bildschirm (115) so ausgelegt ist, dass er in Bezug auf die durch das Frontpaneel (110) gebildete Ebene verstellbar ist.

9. Passagiersitzeinheit nach einem der Ansprüche 1 bis 8, ferner umfassend ein Seitenpaneel (120), das so ausgelegt ist, dass es die Sitzeinheit seitlich begrenzt, und ferner umfassend eine private Tür (121), die so ausgelegt ist, dass sie verschiebbar entlang einer Längsachse der Sitzeinheit am Seitenpaneel (120) montierbar ist.

10. Passagiersitzeinheit nach Anspruch 9, bei der die private Schiebetür (121) in dem Seitenpaneel (120) eingefasst ist.

11. Passagiersitzeinheit nach einem der Ansprüche 1 bis 10, ferner umfassend ein Schalenmodul, das einen Sitzträger (130), der so ausgelegt ist, dass er unter der Sitzfläche (10) positioniert ist, Seitenpaneele (120), die so ausgelegt sind, dass sie die Sitzeinheit seitlich begrenzen, eine hintere Konsole (140), die so ausgelegt ist, dass sie eine Fußablage (50) einer angrenzenden hinteren Sitzeinheit definiert, und ein hinteres Modul (150) umfasst, das so ausgelegt ist, dass es ein Frontpaneel (110) einer angrenzenden hinteren Sitzeinheit definiert.

12. Passagiersitzeinheit nach Anspruch 11, bei der das Schalenmodul eine oder mehrere Schnittlinien (170) aufweist, die sich in Längsrichtung erstrecken, wobei die Schnittlinien einer oder mehreren möglichen Breiten des Schalenmoduls entsprechen, wobei der Sitzträger (130) und/oder die Seitenpaneele (120) und/oder die Konsole (140) und/oder das hintere Modul (150) eine Abmessung entlang der Verbindungsachse zwischen der Lendenwirbelstütze und der Sitzfläche (29) aufweisen, die anpassbar ist.

13. Anordnung von Passagiersitzeinheiten für eine Flugzeugkabine, umfassend eine Mehrzahl von Passagiersitzeinheiten nach einem der Ansprüche 1 bis 12, wobei die Passagiersitzeinheiten parallel hintereinander angeordnet sind, so dass sich die Liegefläche diagonal in Bezug auf eine Längsachse der Sitzeinheit erstreckt und die Längsachse der Sitzeinheit so ausgelegt ist, dass sie parallel zu einer Achse der Kabine ist, in der die Sitzeinheit vorgesehen ist.

14. Anordnung von Passagiersitzeinheiten für eine Flugzeugkabine, umfassend eine Mehrzahl von Passagiersitzeinheiten nach einem der Ansprüche 1 bis 12, wobei die Passagiersitzeinheiten so versetzt angeordnet sind, dass sich die Liegefläche parallel zu einer Achse der Sitzeinheit erstreckt und die Längsachse (11) einer Sitzeinheit so ausgelegt ist, dass sie eine Neigung in Bezug auf eine Achse der Kabine aufweist, in der die Sitzeinheit vorgesehen ist, und die Längsachse (12) einer benachbarten hinteren Sitzeinheit eine so ausgelegt ist, dass sie eine entgegengesetzte Neigung in Bezug auf die Achse der Kabine aufweist.

15. Verfahren zum Herstellen einer Passagiersitzeinheit für eine Flugzeugkabine nach Anspruch 11, wobei das Verfahren die folgenden Schritte umfasst:
- Herstellen eines Schalenmoduls mit einer maximalen Breite des Schalenmoduls (Lmax),
- Bestimmen einer Breite des Schalenmoduls (Ldet), wobei die bestimmte Breite des Schalenmoduls (Ldet) so ausgelegt ist, dass sie mit einer Breite der Flugzeugkabine kompatibel ist, für die das Schalenmodul vorgesehen ist,
- wenn die bestimmte Breite des Schalenmoduls (Ldet) kleiner als die maximale Breite des Schalenmoduls (Lmax) ist, Trennen des Schalenmoduls entlang einer Schnittlinie des Schalenmoduls, um ein Schalenmodul mit einer Breite zu erhalten, die im Wesentlichen der bestimmten Breite (Ldet) entspricht.

## Claims

1. Passenger seat unit for an aircraft cabin, comprising a seat cushion (10), a backrest (20) mounted so as to be movable between a first position and a second position, and a leg rest (30) mounted so as to be movable between a first position and a second position, the seat unit being oriented along a longitudinal axis of the seat unit, the seat unit having :
- an upright configuration in which the backrest (20) and the leg rest (30) are in the first position, and
- a bed configuration in which the backrest (20) and the leg rest (30) are in the second position, the backrest (20), the seat cushion (10) and the leg rest (30) forming a substantially flat and continuous surface
in which :
- the seat cushion (10) is fixed,
- the backrest (20) is mounted so as to be able to rotate between the first position and the second position about a junction axis between the backrest and the seat (29), the backrest (20) being adapted to accommodate a back of a passenger when the backrest (20) is in the first position and a head of a passenger when the backrest (20) is in the second position
- the leg rest (30) is mounted so as to be rotatable between the first position and the second position about an axis of junction between the leg rest and the seat (39),
the passenger seat unit being **characterised in that** the
seat cushion (10) has a dimension in the direction of the axis of connection between the backrest and the seat cushion (29), called the width which is greater than a width of the backrest (20), and **in that** the seat cushion (10) has a forwardly flared shape, a first side edge of the seat cushion (13) being aligned with the longitudinal axis of the seat unit, and a second side edge of the seat cushion (14) being arranged diagonally with respect to the longitudinal axis of the seat unit.

2. The passenger seat unit according to claim 1, wherein the backrest (20) and the leg rest (30) are rotatably mounted about respective pivot connections, and wherein the rotation of the backrest (20) is independent of the rotation of the leg rest (30).

3. A passenger seat unit according to any of claims 1 or 2, further comprising a headrest (40) rotatably mounted between a first position and a second position, wherein when the seat unit is in the upright configuration, the backrest (20) and the headrest (40) are in the first position and form a substantially flat and continuous surface, and wherein rotation of the headrest (40) is independent of rotation of the backrest (20) and rotation of the leg rest (30).

4. A passenger seat unit according to any of claims 1 to 3, further comprising a footrest (50) adapted to be separated from the seat cushion (10) by a distance substantially corresponding to a dimension of the leg rest (30), such that when the seat unit is in the bed configuration, the backrest (20), the seat cushion (10), the leg rest (30) and the footrest (50) form a substantially flat and continuous surface.

5. Passenger seat unit according to any of claims 1 to 4, comprising two armrests (16, 17) laterally delimiting the seat cushion (10), wherein one of the two armrests (16, 17) is a longitudinal armrest (16) arranged at the first side edge of the seat cushion (13), and the other of the two armrests (16, 17) is a diagonal armrest (17) arranged at at least a part of the second side edge of the seat cushion (14).

6. A passenger seat unit according to any of claims 1 to 5, further comprising a front panel (110) and a shelf (113) adapted to be mounted on the front panel (110) so as to be rotatable about a first axis of rotation between a folded position in which the shelf (113) is folded against the front panel (110) and an open position in which the shelf (113) is disposed substantially parallel to the seat cushion (10) so as to form a working surface for the passenger, wherein in the bed configuration, the backrest (20), the seat (10) and the leg rest (30) form a surface extending substantially in a horizontal plane, the front panel (110) extending substantially in a vertical plane perpendicular to the horizontal plane, and wherein the shelf (113) extends substantially in a vertical plane when the shelf (113) is in the folded down position and in a horizontal plane when the shelf (113) is in the open position .

7. A passenger seat unit according to claim 6, wherein the shelf (113) comprises a first tray (1131), a second tray (1132) and a third tray (1133), the trays being superimposed, wherein the first tray (1131) is adapted to be rotatably mounted about a second axis of rotation perpendicular to the first axis of rotation, and the second tray (1132) is adapted to be slidably mounted about the first axis.

8. A passenger seat unit according to any of claims 1 to 7, further comprising a front panel (110), the front panel (110) having a recess adapted to install a screen (115), wherein the screen (115) is adapted to be tiltable relative to the plane formed by the front panel (110).

9. A passenger seat unit according to any of claims 1 to 8, further comprising a side panel (120) adapted to laterally delimit the seat unit, and further comprising a privacy door (121) adapted to be mounted on the side panel (120) slidable along a longitudinal axis of the seat unit.

10. The passenger seat unit of claim 9, wherein the sliding privacy door (121) is embedded in the side panel (120).

11. A passenger seat unit according to any of claims 1 to 10, further comprising a shell module comprising a seat support (130) adapted to be positioned under the seat cushion (10), side panels (120) adapted to laterally delimit the seat unit, a rear console (140) adapted to define a footrest (50) of an adjacent rear seat unit, and a rear module (150) adapted to define a front panel (110) of an adjacent rear seat unit

12. The passenger seat unit according to claim 11, wherein the shell module has one or more cut-out lines (170) extending in the longitudinal direction, the cut-out lines corresponding to one or more possible shell module widths, the seat support (130) and/or the side panels (120) and/or the rear console (140) and/or the rear module (150) having a dimension in the direction of the connecting axis between the backrest and the seat cushion (29) which is adaptable.

13. A passenger seat unit arrangement for an aircraft cabin, comprising a plurality of passenger seat units according to any of claims 1 to 12, the passenger seat units being arranged parallel one behind the other, such that the bed surface extends diagonally to a longitudinal axis of the seat unit and the longitudinal axis of the seat unit is adapted to be parallel to an axis of the cabin in which the seat unit is arranged.

14. A passenger seat unit arrangement for an aircraft cabin, comprising a plurality of passenger seat units according to any one of claims 1 to 12, the passenger seat units being arranged in a staggered arrangement such that the bed surface extends parallel to a seat unit axis and that the longitudinal axis (l1) of a seat unit is adapted to have an inclination to a cabin axis in which the seat unit is arranged, and the longitudinal axis (l2) of an adjacent rear seat unit is adapted to have an opposite inclination to the cabin axis .

15. A method of manufacturing a passenger seat unit for an aircraft cabin according to claim 11, the method comprising the following steps:
- manufacturing a shell module having a maximum shell module width (Lmax),
- determining a shell module width (Ldet), the determined shell module width (Ldet) being adapted to be compatible with a width of the aircraft cabin in which the shell module is to be arranged,
- when the determined hull module width (Ldet) is less than the maximum hull module width (Lmax), cutting the hull module along a hull module cutting line , so as to obtain a hull module having a width substantially equal to the determined width (Ldet).
